(19) Europäisches Patentamt
European Patent Office
Office européen des brevets

(11) Publication number: **0 418 492 A2**

(12) # EUROPEAN PATENT APPLICATION

(21) Application number: 90113784.4

(51) Int. Cl.5: H02M 3/337

(22) Date of filing: 18.07.90

(30) Priority: 22.09.89 JP 246915/89
26.12.89 JP 337344/89
28.02.90 JP 47419/90
23.04.90 JP 107136/90

(43) Date of publication of application:
27.03.91 Bulletin 91/13

(84) Designated Contracting States:
DE GB NL

(71) Applicant: Yokogawa Electric Corporation
9-32, Nakacho 2-chome Musashino-shi
Tokyo 180(JP)

(72) Inventor: Shioya, Masaki
2-5-3, Nishikubo
Musashino-shi, Tokyo(JP)
Inventor: Hanawaka, Masuo
301-37, Kawacho
Hachioji-shi, Tokyo(JP)

(74) Representative: Henkel, Feiler, Hänzel & Partner
Möhlstrasse 37
W-8000 München 80(DE)

(54) **Switching power supply.**

(57) Disclosed a switching power supply for controlling an output voltage to a ccnstant value with respect to fluctuations in input or in load. The switching power supply incorporates a DC power supply; two dividing capacitors connected in series to both ends of the DC power supply; two semiconductor switches connected in series to both ends of the DC power supply; a transformer having a primary winding one end of which is connected to a connecting point of the two dividing capacitors; and a T type circuit composed of two inductors connected in series between a connecting point of the two semiconductor switches and the other end of the primary winding of the transformer and a capacitor connected between a connecting point of the two inductors and the other end of the primary winding of the transformer. Control characteristics of the switching power supply are improved by reducing dependency of the output voltage on the fluctuations in load.

Fig.4

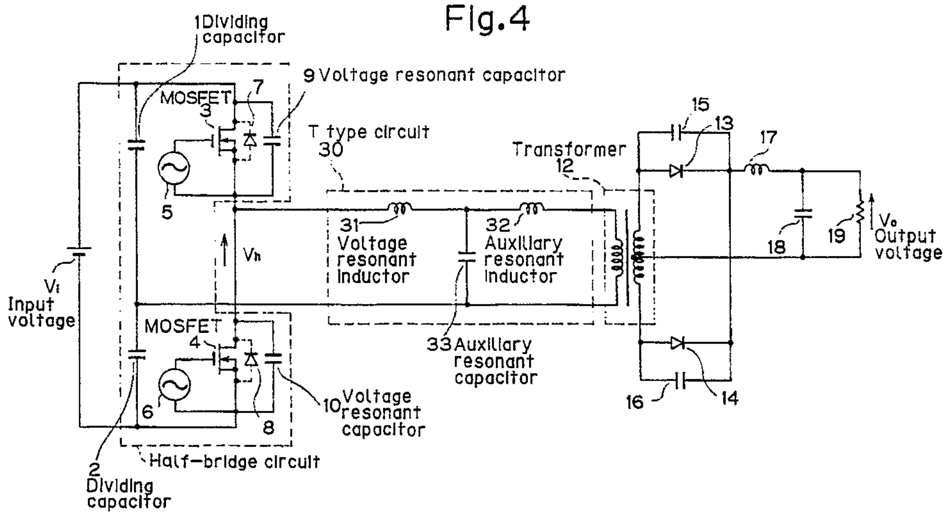

# SWITCHING POWER SUPPLY

## BACKGROUND OF THE INVENTION

### 1. Field of the Invention

The present invention is directed to an improvement of control characteristics of a switching power supply for controlling an output voltage to a constant value with respect to fluctuations in input or in load.

### 2. Description of the Prior Art

A switching power supply serves to supply a constant DC voltage with respect to a variety of loads by inputting a DC voltage which fluctuates. In particular, a voltage resonant type switching power supply is based on a system for switching by converting variations in voltages of semiconductor switches such as MOSFETs into sine waveforms which smoothly vary while utilizing an LC resonance. This type of switching power supply exhibits a characteristic of having a smaller switching loss and less noises caused during a switching operation than in prior art switching systems.

FIG. 1 is a circuit diagram showing one example of the prior art switching power supply. Referring to FIG. 1, the symbol Vi represents an input voltage; 1 and 2 dividing capacitors, constituting a Half-bridge, for halving the input voltage Vi; 3 and 4 semiconductor switches such as MOSFETs connected in series to both ends of the input voltage Vi; 5 and 6 excitation power sources, connected between gate/source terminals of the MOSFETs 3 and 4, for driving the MOSFETs 3 and 4; 7 and 8 parasitic diodes to the MOSFETs 3 and 4; 9 and 10 voltage resonant capacitors connected between drain/source terminals of the MOSFETs 3 and 4; 11 a voltage resonant inductor one end of which is connected to a connecting point between the dividing capacitors 1 and 2; 12 a transformer having a primary winding both ends of which are connected to a connecting point between the MOSFETs 3 and 4 as well as to the other end of the voltage resonant inductor 11; 13 and 14 rectifying diodes having anodes connected to both ends of a secondary winding of the transformer 12; 15 and 16 snubber capacitors connected in parallel to the rectifying diodes 13 and 14; and 17 a choke coil one end of which is connected to cathodes of the rectifying diodes 13 and 14. Designated at 18 and 19 are a filter capacitor and a load resistor which are connected between the other end of the choke coil 17 and a mid-point of the secondary winding of the transformer 12. The choke coil 17 and the filter capacitor 18 are combined to constitute an output filter. The symbol Vo denotes an output voltage impressed on both ends of the load resistor 19. Indicated at Vh is an output voltage of a Half-bridge circuit constructed of components ranging from the dividing capacitors 1 and 2 to the voltage resonant capacitors 9 and 10. The numeral 20 represents an output feedback circuit, consisting of dividing resistors 21 and 22, a reference voltage 23, a comparator 24 and an ON time control circuit 25, for changing an ON time of switching of the MOSFETs 3 and 4, corresponding to a difference between the output voltage Vo and a reference voltage.

Based on this construction, FIG. 2 is an operating waveform diagram of assistance in explaining an operation of the device depicted in FIG. 1. FIG. 2(1) indicates an output of the excitation power source 5, i.g., a gate drive signal of a MOSFET 3 which is turned ON at a high level thereof; FIG. 2(2) an output of the excitation power source 6, viz., a gate drive signal of a MOSFET 4 which is turned ON at a high level thereof; FIG. 2(3) a drain-source voltage of the MOSFET 3; FIG. 2(4) a drain current of the MOSFET 3; FIG. 2(5) a drain current of the MOSFET 4; FIG. 2(6) a current flowing in the primary winding of the transformer 12 and the voltage resonant inductor 11; FIG. 2(7) a current flowing in the dividing capacitors 1 and 2; and FIG. 2(8) a current flowing in the voltage resonant capacitors 9 and 10.

As illustrated in FIGS. 2(1) and 2(2), the MOSFETs 3 and 4 are turned ON alternately for a given period of time by the excitation power sources 5 and 6. When the MOSFET 3 is turned ON at a timing t0, the current depicted in FIG. 2(4) flows in the MOSFET 3. A negative current flows in the parasitic diode 7 and works to regenerate the energy to an input. When turning OFF the MOSFET 3 at a timing t1, a resonant state is developed during a period ranging from t1 to t2 by use of the voltage resonant capacitors 9 and 10 in combination with the voltage resonant inductor 11. A voltage at both ends of the voltage resonant capacitor 10 is, though a period from t2 to t3 originally assumes the resonant state, held at substantially zero for the parasitic diode 8. To be specific, an input voltage Vi is applied to both ends of the MOSFET 3, while both ends of the MOSFET 4 assume substantially zero voltage. At this time, the MOSFET 4 is turned ON (timing t3), and a switching loss is thereby remarkably reduced (zero voltage switching ). The MOSFET 4 is kept ON during a period from t3 to t4. When turning OFF the MOSFET 4 (timing t4), similarly during the t1-t2 period, the resonant state is developed once again, with the result that the voltage at both ends of the MOSFET 4 rises while being resonated (period from t4 to t5). During a period from t5 to t6, the zero voltage is held at both ends of the voltage resonant capacitor 9 for the sake of the parasitic diode 7 as seen during the period from t2 to t3. Namely, the input voltage Vi is applied to both ends of the MOSFET 4, and both ends of the MOSFET 3 assume substantially zero voltage. At this time, the MOSFET 3 is turned ON (timing t6), thereby considerably decreasing the switching loss (zero voltage switching). These operations are repeated. The current depicted in FIG. 2(6) flows in the primary winding of the transformer 12 and the voltage resonant inductor 11 to transfer the energy to the secondary side. Hence, when turning ON the MOSFETs 3 and 4, the voltage applied thereto is almost zero. Whereas in an OFF state thereof, the waveform of the voltage across the MOSFETs is moderate due to the resonance. For these two reasons, the switching loss can remarkably be decreased as well as reducing the noises caused during the switching operation. Control over the output voltage is effected by means of the output feedback circuit 20 for changing an ON time of switching of the MOSFETs 3 and 4, corresponding to a difference between the output voltage and the reference voltage. More specifically, the ON time of the MOSFETs 3 and 4 is changed by use of the ON-time control circuit 25 in accordance with an output error detected by the dividing resistors 21 and 22 in combination with the reference voltage 23 and the comparator 24. That is, if the output voltage is small, the ON time is increased (both a switching cycle and a duty become large), and much input power is conveyed to the output side. Whereas if large, the ON time is decreased. Note that an OFF time is determined by a resonant frequency and is therefore invariable. As a result, the switching frequency has to be changed for the output control.

According to the switching power supply associated with the prior art discussed above, if the output filer constructed of the choke coil 17 and the filter capacitor 18 is sufficiently large, the secondary side can be replaced by a current source Io. If the Half-bridge circuit consisting of the components ranging from the dividing capacitors 1 and 2 to the voltage resonant capacitors 9 and 10 is replaced by a DC-AC converter, its circuitry can be expressed in a simplified circuit block diagram where the circuit is, as shown in FIG. 3, composed of the input voltage Vi, the DC-AC converter 26, the voltage resonant inductor 11, the load resistor 19 and the current source Io. As illustrated in FIG. 3, however, the arrangement that the load resistor 19 and the voltage resonant inductor 11 are connected in series causes an increment in output impedance, whereby the output voltage Vo undergoes a great influence exerted by the fluctuations in load.

## SUMMARY OF THE INVENTION

It is the first object of the present invention, which has been inspired by the foregoing problems, to improve control characteristics of a switching power supply by reducing dependency of an output voltage on fluctuations in load by virtue of provision of a T type circuit composed of two pieces of inductors connected in series and a capacitor one end of which is connected to a connecting point of the two inductors.

It is the second object of the invention to control the output voltage while a switching frequency remains fixed by providing a variable inductor and an output voltage control circuit for increasing and decreasing a variable inductor, corresponding to a difference between the output voltage and a reference voltage.

It is the third object of the invention to improve transient characteristics of the output control with such an arrangement that fluctuations in input are absorbed by providing an input feedforward loop or an arrangement in which a variation width of the inductance required for the output control is diminished by providing a switch control circuit for controlling an ON time of switching of a semiconductor switch in accordance with the input voltage.

It is the fourth object of the invention to attain miniaturization of the devices by reducing the RMS value of a current flowing a dividing capacitor for dividing the input voltage.

## BRIEF DESCRIPTION OF THE DRAWINGS

Other objects and advantages of the present invention will become apparent during the following discussion taken in conjunction with the accompanying drawings, in which:

FIG. 1 is a circuit diagram showing one example of the prior art switching power supply.

FIG. 2 is an operating waveform diagram of assistance in explaining an operation of the device depicted in FIG. 1;

FIG. 3 is a simplified circuit block diagram of the device depicted in FIG. 1;

FIG. 4 is a circuit block diagram showing a first embodiment of a switching power supply of the present invention;

FIG. 5 is a simplified circuit block diagram of the device depicted in FIG. 4;

FIG. 6 is a circuit block diagram showing a second embodiment of the switching power supply of the invention;

FIG. 7 is a circuit block diagram illustrating a third embodiment of the switching power supply of the invention;

FIG. 8 is a circuit block diagram illustrating a fourth embodiment of the switching power supply of the invention;

FIG. 9 is a circuit block diagram showing a fifth embodiment of the switching power supply of the invention;

FIG. 10 is an operating mode diagram of assistance in explaining a state where a primary current of the device depicted in FIG. 9 is produced;

FIG. 11 is a circuit block diagram illustrating an embodiment where the present invention is applied to a current control type magnetic amplifier constant voltage power supply;

FIG. 12 is a circuit block diagram showing a sixth embodiment of the switching power supply of the invention;

FIG. 13 is a circuit block diagram illustrating a variant embodiment of the device depicted in FIG. 12;

FIG. 14 is a circuit block diagram illustrating a variant embodiment of the device depicted in FIG. 13;

FIG. 15 is a circuit block diagram showing a seventh embodiment of the switching power supply of the invention;

FIG. 16 is a circuit block diagram illustrating a specific example of an input voltage control circuit employed in the device depicted in FIG. 15;

FIG. 17 is a diagram showing a relationship of a variable inductor control range versus fluctuations both in input and in load;

FIG. 18 is a diagram showing characteristics of a variable inductor;

FIG. 19 is a circuit block diagram illustrating an eighth embodiment of the switching power supply of the invention;

FIG. 20 is a diagram showing a relationship between the input voltage of the device depicted in FIG. 19 and an ON time of switching;

FIG. 21 is a diagram illustrating output waveforms of a gate driving control circuit of the device depicted in FIG. 19;

FIG. 22 is a block diagram showing one example of a conventional variable inductor;

FIG. 23 is a block diagram showing a first embodiment of a variable inductor used in the switching power supply of the invention;

FIG. 24 is a block diagram showing a variant embodiment of the variable inductor of FIG. 23;

FIG. 25 is an equivalent circuit diagram of FIG. 23 (FIG. 24), taken in the direction of an inductor winding;

FIG. 26 is an equivalent circuit diagram of FIG. 23 (FIG. 24), taken in the direction of a control winding;

FIG. 27 is a simplified equivalent circuit diagram of FIG. 26;

FIG. 28 is a block diagram illustrating a second embodiment of the variable inductor employed in the switching power supply of the invention; and

FIG. 29 is a block diagram illustrating a variant embodiment of the variable inductor of FIG. 24.

## DESCRIPTION OF THE PREFERRED EMBODIMENTS

Turing first to FIG. 4, there is shown a circuit block diagram of a first embodiment of a switching power supply according to the present invention. A difference in arrangement between FIG. 4 and FIG. 1 lies in provision of a T type circuit 30 composed of two pieces of resonant inductors (one is referred to as a voltage resonant inductor 31, and the other is an auxiliary resonant inductor 32) which are employed in place of the voltage resonant inductor 11 and connected in series between a connecting point of MOSFETs 3 and 4 and one end of a primary winding of a transformer 12, and an auxiliary resonant capacitor 33 having one end connected a connecting point of the two resonant inductors 31 and 32 and the other end connected to a connecting point of the other end of the primary winding of the transformer 12 to a connecting point of dividing capacitors 1 and 2.

Based on this construction, operations of different components from those of the device depicted in FIG. 1 will hereinafter be described. Referring to FIG. 4, if the output filter constructed of the choke coil 17 and the filter capacitor 18 is sufficiently large, the secondary side can be replaced by the current source Io. In the case of replacing the Half-bridge circuit consisting of components ranging from dividing capacitors 1 and 2 to voltage resonant capacitors 9 and 10 with a DC-AC converter, the circuitry thereof can be expressed in a simplified circuit block diagram where the circuit is, as illustrated in FIG. 5, constructed of an input voltage Vi, a DC-AC converter 26, a T type circuit 30, a load resistor 19 and the current source Io. A voltage Vh between a connecting point of the dividing capacitors 1 and 2 and a connecting point of semiconductor switches 3 and 4-i. e., an output voltage of the DC-AC converter 26-is expressed by such a trapezoidal waveform that a peak value is given by (input voltage Vi)/2 as shown in FIG. 5. A current i1 flowing in an auxiliary resonant inductor 32 is expressed by a trapezoidal waveform where the peak value is a load current Io as indicated in FIG. 5. When approximating them with sine waves, a circuit equation representing the simplified circuit block diagram of FIG. 5 is given as follows:

$$Vh = S \cdot Lr\,(i1 + i2) + i2/S \cdot Cs \qquad (1)$$

$$i2/S \cdot Cs = S \cdot Lsil + V0 \qquad (2)$$

where Lr is the inductance of a voltage resonant inducttor 31, Ls is the inductance of an auxiliary resonant inductor 32, Cs is the capacitance of an auxiliary resonant capacitor 33 and i2 is the current flowing in the auxiliary resonant capacitor 33.

Based on the formulae (1) and (2), when erasing the current i2 flowing in the auxiliary resonant capacitor 33, the following equation is established:

$$V0 = [Vh - S\,\{Lr + Ls\,(S^2 \cdot Lr \cdot Cs + 1)\}i1] \,/\, (1 + S^2 \cdot Lr \cdot CS) \qquad (3)$$

In this equation (3), the following equation (4) which meets a condition to eliminate dependency of the output voltage V0 on the load current i1.

$$Lr + Ls\,(S^2 \cdot Lr \cdot CS + 1) = 0 \qquad (4)$$

Namely, when determining the inductance Lr of the voltage resonant inductor 31, the inductance Ls of the auxiliary resonant inductor 32 and the capacitance Cs of the auxiliary resonant capacitor 33 in order to satisfy the condition of the following formula (5) where the formula (4) has been solved, the output voltage V0 does not undergo any influence by the fluctuations in load. This is referred to as an auxiliary resonant condition.

$$\omega = 2\pi fs$$

$$= \sqrt{(1 + Ls/Lr)\,(1/Cs \cdot Ls)} \qquad (5)$$

where fs is the switching frequency.

The output voltage at this time is given by:

$$Vo = -\,(Ls/Lr)\,(Vi/2) \qquad (6)$$

It follows that the output voltage Vo is determined only by the output voltage Vh (= Vi/2) of the DC-AC converter 26, i.e., by the input voltage Vi.

FIG. 6 is a circuit block diagram illustrating a second embodiment of the voltage resonant type switching power supply of the invention. A different arrangement of FIG. 6 from that of FIG. 4 is that the T type circuit 30 consisting of the voltage resonant inductor 31, the auxiliary resonant inductor 32 and the auxiliary resonant capacitor 33 is provided on the side of the secondary winding of the transformer 12. Note that the numerals *34~37* shown in the Figure represent rectifying diodes.

In such a constitution, the operation of this embodiment is the same as that of the device depicted in FIG. 4, and the description is therefore omitted herein. The condition (a constant of the T type circuit 30) for eliminating the fluctuations in load in this embodiment is that the inductance Lr of the voltage resonant inductor 31 be substitutively expressed such as $Lr/N^2$ where N is the turn ratio of the transformer 12, the inductance Ls of the auxiliary resonant inductor 32 be likewise expressed by $Ls/N^2$, and the capacitance Cs of the auxiliary resonant capacitor 33 be likewise given by $N^2Cs$. A conditional formula to eliminate the influence by the fluctuations in load is identical with the formulae (4) and (5), wherein the influence by the fluctuations in load on the output voltage disappears. Only the dependency associated with the fluctuations in input still exists, and hence a control range of the output voltage can be narrowed.

FIG. 7(1) is a circuit block diagram showing a third embodiment of the switching power supply classified as a voltage resonant type according to the present invention. A difference between FIG. 7(1) and FIG. 4 is the arrangement that a leakage inductance 32a on the primary side of the transformer 12 is employed as a substitute for the auxiliary resonant inductor 32, connected to one end of the primary winding of ihe transformer 12, of the two resonant inductors constituting the T type circuit.

In accordance with this arrangement, the operation of this embodiment is the same as that of the device illustrated in FIG. 4, and the description is therefore omitted herein. In the conditional equation shown in the formulae (4) and (5), a condition (a constant of a T type circuit 30a) to eradicate the influence given by the fluctuations in load in this embodiment is expressed in the following formula where the inductance Ls of the auxiliary resonant inductor 32 is replaced with a leakage inductance Le of the transformer 12.

$Lr + Le (S^2 \cdot Lr \cdot CS + 1) = 0$ (7)

$\omega = 2\pi fs$

$= \sqrt{(1 + Le/Lr)(1/Cs \cdot Le)}$ (8)

The output voltage Vo in this case is given by:

$Vo = - (Le/Lr) Vi$ (9)

Hence, the output voltage Vo is determined only by the input voltage Vi, whereby the output voltage is not, as in the case of the device depicted in FIG. 4, subjected to the influence by the fluctuations in load. Besides, if the T type circuit is constructed by utilizing the leakage inductance of the transformer, unlike the device of FIG. 4 one of the two resonant inductors becomes unnecessary, resulting in a reduction in the number of components and an improvement of the reliability as well. It is to be noted that there may be employed the leakage inductance 32a on the primary side, or, as illustrated in FIG. 7(2), leakage inductances 32a1 and 32a2 on the secondary side because of their being equivalent. Where the secondary-side leakage inductance is employed, the leakage inductance Le of the conditional formulae to remove the influence by the fluctuations in load which is shown in formulae (7) and (8) may be arranged to be a primary-side conversion value.

According to the device constructed such that the T type circuit 30 shown in FIG. 6 is provided on the side of the secondary winding of the transformer 12, a leakage inductance of the transformer 12 may be used as a substitute for the voltage resonant inductor 31 connected to one end of the secondary winding of the transformer 12, and the same effects as those of the device shown in FIG. 7 can also be obtained.

FIG. 8 is a circuit block diagram showing a fourth embodiment of the switching power supply of the invention. A difference in arrangement between FIGS. 8 and 7(1) is that a winding capacitance 33a of the primary winding of the transformer 12 substitutes for the auxiliary resonant capacitor 33 constituting the T type circuit. The operation of the fourth embodiment is identical with that of the device shown in FIG. 4, and the explanation is therefore elided herein. A condition to disappear the influence by the fluctuations in load in the conditional equation shown in the formulae (7) and (8) is expressed by replacing the capacitance Cs of the auxiliary resonant capacitor 33 with the winding capacitance Cw of the primary winding of the transformer 12.

$Lr + Le (S^2 \cdot Lr \cdot Cw + 1) = 0$ (10)

$\omega = 2\pi fs$

$= \sqrt{(1 + Le/Lr)(1/Cw \cdot Le)}$ (11)

If the T type circuit is constructed by utilizing the winding capacitance of the transformer, the necessity for the auxiliary resonant capacitor is removed unlike the device of FIG. 7, the number of components can be reduced as well ameliorating the reliability.

Incidentally, according to the device arranged such that the T type circuit 30 shown in FIG. 6 is provided on the side of the secondary winding of the transformer 12, the leakage inductance of the transformer 12 may be employed as a substitute for the voltage resonant inductor 31. The winding capacitance of the secondary winding of the transformer 12 may also be used in place of the auxiliary resonant capacitor 33. With this arrangement, the same effects as those of the device depicted in FIG. 8 can be obtained.

FIG. 9 is a circuit block diagram illustrating a fifth embodiment of the switching power supply of the invention. In the prior art example of FIG. 1, the voltage resonant capacitors 9 and 10 are connected to both ends of the MOSFETs 3 and 4. The current, as illustrated in FIG. 2(7) , constantly flows in the dividing capacitors 1 and 2 for dividing the input voltage Vi, thereby augmenting the effective current flowing in the dividing capacitors 1 and 2. In consequence of this, large-sized capacitors each having an allowable ripple current have to be used as the dividing capacitors 1 and 2 to restrain the emission of heat. This is a factor of hindering the miniaturization of the device, which is emphasized in the fifth embodiment of the present invention. The device can be miniaturized by reducing the RMS current of the dividing capacitors for dividing the input voltage.

Referring back to FIG. 9, the difference in construction between FIGS. 4 and 9 will be explained. In FIG. 4, the voltage resonant capacitors are connected to both ends of the MOSFETs 3 and 4. In contrast, according to the fifth embodiment, a voltage resonant capacitor 27 is connected to between a connecting point of the dividing capacitors 1 and 2 and a connecting point of the MOSFETs 3 and 4.

Based on this construction, the operation is the same as that of the device of FIG. 4 except for such a point that the generation of current on the primary side differs during a certain period, i.e., there appears a period for which no current flows in the dividing capacitors. Hence, the description will be simplified for convenience. Turning to FIG. 10, there is illustrated an operating mode diagram of assistance in explaining a state where the current on the primary side is generated by splitting into four operating modes a period from t1 to t5 shown in the operational waveform diagram of FIG. 2. In FIG. 10, both of the MOSFETs 3 and 4 are turned OFF during a period from t1 to t2 of FIG. 10(1), and the resonant state is present by virtue of a closed loop formed of the voltage resonant capacitor 27 and the T type circuit 30. During this period, no current flows in the dividing capacitors 1 and 2. During a period from t2 to ta shown in FIG. 10(2), the parasitic diode 8 is turned ON, while the voltage at both end of the voltage resonant capacitor 27 is kept at a constant level obtained by dividing the input voltage Vi with the dividing capacitors 1 and 2. The current flowing through the T type circuit 30 transits to currents Id1 and Id2 of the dividing capacitors 1 and 2. During a period from ta to t4 shown in FIG. 10(3), the MOSFET 4 is turned ON, and contrary to the period of FIG. 10(2) the currents flowing in the dividing capacitors 1 and 2 in turn flow into the T type circuit 30. During a period from t4 to t5 shown in FIG. 10 (4), the MOSFETs 3 and 4 are again turned OFF, and the same resonant state as that for the period of FIG. 10 (1) is present. No current flows in the dividing capacitors 1 and 2. Therefore, the current running through the dividing capacitors 1 and 2 assumes an discontinuous waveform where a portion indicated by oblique lines in FIG. 2(7) is removed. The current taking the discontinuous waveform and flowing in the voltage resonant capacitor 27 has a waveform that is twice in size as in the case of a waveform including the portion drawn with the oblique lines of FIG. 2(8) because of being a single piece of voltage resonant capacitor. Hence, the RMS value of the current flowing in the dividing capacitors 1 and 2 is reduced by a quantity equivalent to the portion of the oblique lines of FIG. 2(7), thereby decreasing an amount of the heat evolved from the dividing capacitors 1 and 2. A small-sized capacitor having a small allowable ripple current can be employed, resulting in the miniaturization of the device.

The fifth embodiment may be applied to the device arranged in such a manner that the T type circuit 30 illustrated in FIG. 6 is provided on the side of the secondary winding of the transformer and further to the device which utilizes the leakage inductances of FIGS. 7 and 8 and the winding capacitance of the transformer as well. Even in such a case, the same effects can be exhibited.

FIG. 11 is a circuit block diagram depicting an embodiment where the present invention is applied to a current control type magnetic amplifier constant voltage power supply. A prior art current control type magnetic amplifier constant voltage power supply takes such a configuration that an inductor 42 and a capacitor 43 are removed from the components shown in FIG. 11. The numeral 44 denotes a rectifying diode. Designated at 41 is a current control type magnetic amplifier for controlling the output, which may be conceived as a kind of variable inductor capable of controlling the output by varying the inductance in accordance with the fluctuations in input or in load. Based on this construction, the arrangement thereof is similar to that of the voltage resonant switching power supply illustrated in PIG. 4. The power supply is not classified as a resonant type. The semiconductor switches 3 and 4 are alternately turned ON at a constant frequency, and an output waveform Vh of a Half-bridge circuit (26) takes, as illustrated in the figure, a pulse form. With this arrangement, as in the way with the device of FIG. 4, the dependency of the output on the load almost disappears, and hence the output control may be effected with respect to the fluctuations in input. A small inductance variable range of a current control type magnetic amplifier 41 suffices, thereby facilitating the design.

Incidentally, a possible arrangement of the current control type magnetic amplifier constant voltage power supply illustrated in FIG. 11 is that the leakage inductance of the transformer 12 may substitute for the inductor 42, and the capacitor 43 may involve the use of winding capacitance of the transformer 12.

Turning to FIG. 12, there is shown a circuit block diagram of a sixth embodiment of the switching power supply classified as a voltage resonant type according to the present invention. The resonant element involves the use of a fixed inductor or a fixed capacitor in the conventional example depicted in FIG. 1 to keep the resonant frequency constant, and it is required that the switching frequency be varied to control the output voltage. The switching frequency does, however, fluctuate depending on the fluctuations in load or in input, and the output filter has to be designed while setting the frequency at the minimum. This leads to a difficulty of miniaturizing the device. Besides, the switching frequency varies over a wide range, and for this reason the noise filter has to cover the wide range. A large-sized filter is needed. An emphasis of the sixth embodiment of the invention is placed on this point, wherein the output voltage can be controlled while the switching frequency remains fixed.

Referring back to FIG. 12, the different arrangement between FIGS. 12 and 4 will be given as follows. One of the two resonant inductors which constitute the T type circuit is used as a variable inductor 28 a control current Ic of which is increased or decreased by an output voltage control circuit 50 in accordance with a difference between the output voltage Vo and the reference voltage. An inductance of the variable inductor 28 is varied by the control current Ic to control the output voltage Vo to a constant value. The output voltage control circuit 50 comprises dividing resistors 51 and 52, a reference voltage 53, a comparator 54 for effecting amplification by taking a difference between the output voltage divided by the dividing resistors 51 and 52 and the reference voltage 53, a phase compensation circuit 55, whose power source is driven by the voltage at both end of the load resistor 19, for performing a phasic compensation on the output of the comparator 54, and a current controlling transistor 56 for effecting a current amplification on the output of the phase compensation circuit 55 and driving a control winding of the variable inductor 28.

Based on the above-described construction, the operation different from that of the device depicted in FIG. 4 will hereinafter be explained. In this embodiment, the voltage at both ends of the load resistor 19 is split by the dividing resistors 51 and 52. The comparator 54 functions to take a difference between the divided output voltage and the reference voltage 53 and, after making the amplification, effects out the phasic compensation on the output thereof. Thereafter, a current conversion is carried out by means of the current controlling transistor 56 to change the control current Ic of the variable inductor 28. If the output voltage Vo is relatively large, the output voltage control circuit 50 operates to reduce the control current Ic. Whereas if relatively small, the circuit 50 operates to increase the control current Ic. The inductance of the variable inductor 28 is thereby varied, and the output voltage Vo is thus controlled. When a resonant condition of the T type circuit 30 is valid, the load-dependency of the output voltage is remarkably reduced, and the output voltage Vo is approximately expressed by the following formula:

$|Vo| = (Ls/Lr)Vi$ (12)

where Ls is the inductance of the auxiliary resonant inductor 32, and Lr is the inductance of the variable inductor 28.

Hence, the output voltage can be controlled while keeping the switching freguency constant by changing the inductance Ls of the auxiliary resonant inductor 32 or the inductance Lr of the variable inductor 28.

A resonant freguency varies with the changes in this inductance, whereby inclinations of ① and ② shown in FIG. 2(3) vary. The variations in these inclinations do not exert any influence on the output voltage Vo if a condition to effect zero voltage switching is satisfied.

Note that the leakage inductance of the transformer 12 may substitute for the auxiliary resonant inductor 32 constituting the T type circuit 30C in the device depicted in FIG. 12, and the auxiliary resonant capacitor 33 may involve the use of the winding capacitance of the. transformer 12. This arrangement contributes to a reduction in the number of components as compared with the device of FIG. 12 as well as improving the reliability.

FIG. 13 is a circuit block diagram illustrating a variant embodiment of the device of FIG. 12. This variant embodiment does not entail the use of the T type circuit. However, the variable inductor 28 is employed instead of the voltage resonant inductor 11 shown in FIG. 1, and there is provided the output voltage control circuit 50 for increasing or decreasing the control current Ic of the variable inductor 28 according to a difference between the output voltage Vo and the reference voltage. The inductance of the variable inductor 28 is changed by the control current Ic to control the output voltage Vo to a constant value.

The output voltage Vo is approximately expressed by the following formula:

$Vo = Vi/(2N\sqrt{1 + (\omega L/R)^2})$ (13)

where N is the ratio of turns on the primary side to those on the secondary side of the transformer 12, R is the load resistance and L is the inductance of the variable inductor 28.

Hence, if the inductance L is set small, the output voltage Vo increases. Whereas if set large, the output voltage Vo decreases. The control range of the output voltage becomes slightly wider than in the device of FIG. 12 by changing the inductance L of the variable inductor 28, but it is feasible to control the output voltage Vo while keeping the switching frequency constant.

Turning to FIG. 14, there is illustrated a circuit block diagram of a variant embodiment of the device depicted in FIG. 13. In accordance with this variant embodiment, a capacitor 29 is connected to both ends of the primary winding of the transformer 12 instead of the snubber capacitors 15 and 16 of the device of FIG. 13. The output voltage Vo can, as in the way with the device of FIG. 13, be controlled while keeping the switching frequency constant, and at the same time the current flowing via the capacitor 29 does not run through the winding of the transformer. For this reason, designing the transformer 12 can be more facilitated than in the device depicted in FIG. 13.

FIG. 15 is a circuit block diagram showing a seventh embodiment of the switching power supply conceived as a voltage resonant type according to the present invention. The difference in construction between FIGS. 15 and 12 is that there are provided two pieces of variable inductors constituting the T type circuit-one variable inductor 28a is formed with a feedforward loop from the input voltage, and the other variable inductor 28b is formed with a feedback loop from the output voltage. In the device of FIG. 12, the T type circuit contributes a considerable shrinkage in the variation range of the variable inductor with respect to the fluctuations in load. In connection with the fluctuations in input, however, it is required that the variable inductor be changed substantially in proportion thereto. The variation range thereof is relatively large. The number of turns of the control winding therefore increases, whereby the inductance of the control winding augments. As a result, the transition of the control current is restricted by this inductance, and a transient response is deteriorated as the case may be. In accordance with the seventh embodiment, much attention is paid to this point. Output control characteristics are ameliorated by changing the inductance from the input voltage to the feedforward.

Returning to FIG. 15, the numeral 60 designates an input voltage control circuit for flowing, to the control winding of the variable inductor 28a, a control current Ic1 corresponding to variations in the input voltage Vi. The circuit 60, as illustrated in FIG. 16, works to perform a functional operation on an divided output voltage Ei obtained by dividing the input voltage Vi by use of dividing resistors R1 and R2. An output Eo thereof undergoes a current amplification by use of a circuit consisting of an OP-amp Op1, a transistor Q1 and a resistor Rf1, thus providing the control current Ic1 for driving the control winding of the variable inductor 28a.

Based on this construction, the operation different from that of the device illustrated in FIG. 12 will be described as blow. Concerning the control range of the variable inductor necessary for the output control, as illustrated in FIG. 17, a control range of Δ Lr is needed for covering the fluctuations both in load and in input. A broader control range is required for input fluctuations (Δ Lr1) rather than load fluctuations (Δ Lr2). Let f(Vi) be the relationship between the input voltage Vi in a central value (Romid: solid line in the Figure) within a load range and the inductance Lr of the two variable inductors, and let g(Ic1) be the relationship between the inductance Lr1of the variable inductor 28a shown in FIG. 18 and the control current Ic1.

Lr1 = g(Ic1) = g(F(Vi))
= f(Vi) (14)

When setting a functional operation F(Vi) in the input voltage control circuit 60 so as to establish the formula (14), the control range of the variable inductor 28a becomes (Δ Lr1). On the other hand, the input fluctuations are slower than the load fluctuations in the switching power supply, and a quantity equivalent to the input fluctuations is controlled by the variable inductor 28a. The variable inductor 28b may therefore control a quantity equivalent to the load fluctuations, and a control range thereof becomes (Δ Lr2) shown in FIG. 17. As a matter of fact, when the input voltage Vi varies, an auxiliary resonant condition deviates, so that the control range (Δ Lr2) becomes more or less different depending on the input voltage Vi. However, the following relationship is established:

(Δ Lr2max) ≪ (Δ Lr)

Hence, a variation range of the variable inductor 28b is remarkably diminished, and the inductance of the control winding of the variable inductor 28b is thereby reduced. Consequently, the transient response can be improved. In addition, a small amount of control winding current may suffice, which in turn conduces to a reduction in control electric power needed for the output feedback. The control ranges (Δ Lr1 and Δ Lr2) are covered by the single variable inductor in the device of FIG. 12, and it follows that the number of turns of the control winding increases to deteriorate the response. On the other hand, the inductance of the variable inductor 28a augments, but the variable inductor 28a does not require a respondency as quick as the variable inductor 28b, which causes no problem. The number of turns of the control winding can be incremented, whereas the control power decreases. Consequently, total control electric power becomes smaller than in the conventional example.

This arrangement can be applied to the variant embodiment, shown in FIG. 13, of the device of FIG. 12 as well as to the current control type magnetic amplifier constant voltage power suply illustrated in FIG. 11, wherein the same effects can be acquired.

FIG. 19 is a circuit block diagram showing an eighth embodiment of the switching power supply classified as a voltage resonant type, of the present invention. The difference arrangement between FIGS. 19 and 12 lies in provision of a switch control circuit 70 for varying an ON time of switching of the MOSFETs 3 and 4 in accordance with the changes in input voltage. The switch control circuit 70 comprises dividing resistors 71 and 72 connected in series to both ends of the input voltage Vi, a functional operation circuit 73 for effecting a functional operation on the output voltages divided by the dividing resistors 71 and 72, and a gate driving control circuit 74 for controlling the ON time of switching of the MOSFETs 3 and 4 on the basis of an output of the functional operation circuit 73. A terminal IN of the gate driving control circuit 74 is employed during a parallel operation and serves to fetch a gate signal from the outside. When the terminal IN is used, signals transmitted from the dividing resistors 71 and 72 to the gate driving control circuit 74 are cut off, and input signals from the terminal IN are outputted intact from the gate driving control circuit 74.

On the basis of such a constitution, the operation different from the device depicted in FIG. 12 will hereinafter be described. Referring to FIG. 19, the input voltage Vi is split by the dividing resistors 71 and 72 of the switch control circuit 70, and the thus divided output voltages are, after undergoing an arithmetic operation by the functional operation circuit 73, converted into an ON time Ton of switching of the MOSFETs 3 and 4 by means of the gate driving control circuit 74. Turning to FIG. 20, there is shown a relationship between the ON time Ton of switching and the input voltage Vi, wherein the ON time Ton of switching becomes shorter as the input voltage Vi increases. An output waveform of the gate driving control circuit 74 is illustrated in FIG. 21, and an OFF time Toff of switching is fixed under the resonant condition. Therefore, only the ON time Ton of switching is varied by the input voltage Vi. More specifically, if the input voltage Vi is large, an electrifying time of the MOSFETs 3 and 4 is decreased for reducing an energy transfer to the output side (FIG. 21(1)). Whereas if small, the electrifying time is increased for augmenting the energy transfer (FIG. 21(2)). In this manner, the dependency of the output voltage Vo on the variations in input voltage can be lessened. A resonant condition of a T type circuit 30c in the device shown in FIG. 12 is typically designed by use of a representative value of an input specification. For this reason, if the input voltage Vi fluctuates larger than the set value in the formula (12), the inductance Lr of the variable inductor 28 greatly varies due to the control over the output voltage Vo, with the result that the auxiliary resonant condition (the formula (5)) is broken. The load dependency of the output voltage is not diminished. Therefore, the variation range of the inductance Lr of the variable inductor 28 due to the load fluctuations becomes considerably wider than in the establishment of the auxiliary resonant condition, and it follows that the quick respondency of the output voltage control to sharp variations in load is deteriorated. This embodiment emphatically deals with this point. As illustrated in FIG. 21, when changing the ON time Ton of switching, the switching frequency fs also changes. However, variations in the switching frequency fs needed for controlling the output voltage Vo in association with the variations in input voltage are remarkably small, and the above-mentioned auxiliary resonant condition in the formula (5) is not broken even when providing the switch control circuit 70. Hence, if the provision of the switch control circuit 70 causes the changes in input voltage , it is possible to sufficiently reduce the load dependency of the output voltage Vo, thereby improving the transient response as well as decreasing a variation width of the variable inductor 28.

Note that the current control type magnetic amplifier constant voltage power supply depicted in FIG. 11 may also be provided with the output voltage control circuit and the switch control circuit. The influence by the fluctuations in input voltage on the output voltage is lessened by controlling the ON time of the semiconductor switch according to the input voltage, and the variation width of inductance of the magnetic amplifier which is required for controlling the output voltage can also be narrowed.

In accordance with the variant embodiment, shown in FIG. 13, of the device of FIG. 12, the switch control circuit is provided, and the ON time of the semiconductor switch is controlled corresponding to the input voltage, thereby reducing the influence by the fluctuations in input voltage on the output voltage. Besides, it is feasible to diminish the variation width of inductance of the variable inductor which is required for controlling the output voltage.

In the first through eighth embodiments, the MOSFETs are, though not limited, employed as the semiconductor switches 3 and 4. Arbitrary electronic switch elements are also usable.

Next, the variable inductors employed in the sixth to eight embodiments of the switching power supply of the present invention will be explained.

FIG. 22 is a block diagram showing one embodiment of a prior art variable inductor. Referring to FIG. 22, a winding a1-a2 serves as a control winding, while a winding b1-b2 serves as an inductor winding. Magnetic fluxes generated by a current flowing through the inductor winding b1-b2 wound separately on two magnetic path members act in opposite directions with respect to the magnetic path member along which the control winding a1-a2 is wound and are thereby offset each other, resulting in no generation of a voltage in the control winding a1-a2. It is therefore possible to reduce interferences of the control winding a1-a2 and of the inductor winding b1-b2. If the current running through the inductor winding b1-b2 becomes large, however, a core is to be saturated by this current. Prevention of the saturation, as illustrated in the FIG. 22, requires formation of air gaps g1 to g3. When increasing lengths of the air gaps g1 to g3, the control current to cause the core saturation increases, whereby large driving electric power is needed. Hence, the lengths of the air gaps are practically limited to small values. If the large current flows in the inductor winding b1-b2, the usability thereof is not obtained because of the saturation. In FIG. 23 and subsequent Figures which will be mentioned later, this point is emphatically dealt with. The control characteristics of the switching power supply are improved by providing the variable inductor having small control electric power, which causes the saturation from the inductor winding with difficulty but facilitates the saturation from the control winding due to an amelioration of a core construction.

FIG. 23 is a block diagram illustrating a first embodiment of the variable inductor employed for the switching power supply of the invention. Referring to FIG. 23, magnetic path members 16-18 are combined to shape a first magnetic path closed in a rectangular shape. The winding a1-a2 is a control winding wound along the magnetic path member 18. Magnetic path members 11-15 are combined to form an E-shaped second magnetic path. Ends of the three magnetic path members (11-13) assuming the E-like configuration are connected via air gaps g11-g13 to the magnetic path members 16-17 constituting the first magnetic path, as a result of which the magnetic path member 12 is used in common; and a pair of symmetric closed magnetic paths are formed on both sides thereof. The winding b1-b2 used as an inductor winding is wound along the magnetic path member 12.

With this arrangement, the closed magnetic path formed of the magnetic path members 16-18 is, when viewed from the control winding a1-a2, formed with no air gap, and the saturation can be effected by a small amount of current. On the other hand, when viewed from the inductor winding b1-b2, a passage through the air gaps g11-g13 is invariably made in the case of providing a closed magnetic path formed of the magnetic path members 12 - 14 - l1 - 15 - 12 and a closed magnetic path formed of the magnetic path members 12 - 15 - 13 - 17 - 12. In consequence, a large current is needed for saturating the closed magnetic path composed of the magnetic path members 11-17. In other words, even when flowing a considerably large current in the inductor winding b1-b2, it is feasible to make it difficult to saturate the closed magnetic path formed of the magnetic path members 11-17 by adjusting the lengths of the air gaps g11-g13. The magnetic fluxes generated by the current running through the control winding a1-a2 gradually cause the saturation of the magnetic path members 16 and 17, at which time there is escalated a magnitude of magnetic resistance of the closed magnetic path composed of the magnetic path members 12 - 14 - 11 -16 - 12 or 12 - 15 - 13 - 17 - 12. The inductance, when viewed from the inductor winding b1-b2, is reduced.

FIG. 24 is a block diagram illustrating a variant embodiment of the variable inductor of FIG. 23. The difference in arrangement between FIGS. 24 and 23 is that an air gap is formed only at the end of the magnetic path member 12 located in the middle of the E-shape. As compared with the arrangement of FIG. 23, a proportion of the magnetic path members to be saturated increases, thereby making it possible to enlarge the variations in inductance.

FIGS. 25 and 26 are equivalent circuit diagrams viewed from the inductor winding b1-b2 and the control winding a1-a2 respectively in FIGS. 23 and 24. Note that throughout FIGS. 25 and 26 the affixes (numerals) represent the components corresponding to those of FIG. 23. In the case of FIG. 24, a relationship is established as follows: an air gap magnetic resistance Rg1 = Rg3 = 0.

Referring to FIGS. 25 and 26, magnetic resistances Ri (i = 1 to 8) at the respective magnetic path members are given by:

$Ri = di/\mu i\ Si$ (15)

where di is the effective magnetic path length, Si is the effective cross-sectional area and $\mu i$ is the magnetic permeability. Magnetic resistances Rgi (i = 1 to 3) of the air gaps are given by:

$Rgi = dgi/\mu 0\ Sgi$ (16)

where dgi is the length of each air gap and Sgi is the cross-sectional area.

FIGS. 25 and 26 are equivalent circuit diagrams when being expressed by use of the magnetic resistances Ri and Rgi. In the equivalent circuit diagram of FIG. 25 when viewed from the inductor winding b1-b2:

$R1 + Rg1 + R4 = R3 + Rg3 + R5$

$R6 = R7$ (17)

If, this equation is established (if symmetric with respect to the magnetic path member 12), magnetic fluxes ø1 and ø2 generated by a magnetomotive force N1I1 are equalized, thereby causing no magnetic flux ø3 passing through a magnetic resistance R8 between two points A and B. Namely, there is caused no interference with the control winding a1-a2 from the inductor winding b1-b2.

On the other hand, in the equivalent circuit diagram of FIG. 26 when viewed from the control winding a1-a2:

$Z1 = R1 + Rg1 + R4$

$Z2 = R2 + Rg2$

$Z3 = R3 + Rg3 + R5$ (18)

When the formula (18) is thus established, the magnetic flux ø1 of the magnetic path member 12 is calculated by the following formula. Note that FIG. 27 is an equivalent circuit diagram in which the equivalent circuit diagram of FIG. 26 is simplified for representation.

$$\phi 1 = (N2I2 - R8\phi) \cdot (R6Z3 - Z1R7) / \Delta$$

$$\Delta = \begin{vmatrix} Z1 + Z3 & 0 & -Z3 \\ 0 & R6 + R7 & R7 \\ Z1 & -R6 & Z2 \end{vmatrix} \quad \ldots (19)$$

Hence,

$R6Z3 - Z1R7 = 0$ (20)

Namely, when establishing an equation such as: $R6Z3 = Z1R7$, $\phi 1 = 0$. No magnetic flux is generated in the magnetic path member 12, thereby causing no interference with the inductor winding b1-b2 from the control winding a1-a2.

At this time, the magnetic resistance when viewed from the control winding a1-a2 is expressed such as:

$R = R8 + (R6 + R7) // (Z1 + Z3)$

$= R8 + (R6 + R7)(Z1 + Z3) / (R6 + R7 + Z1 + Z3)$

$= R8 + (R6 + R7) / \{1 + (R6 + R7) / (Z1 + Z3)\}$ (21)

If Z1 and Z3 contain the air gaps herein (corresponding to FIG. 23), generally the following relationship is given.

$Z1 + Z3 > R6 + R7$ (22)

and,

$R \approx R8 + R6 + R7$ (23)

The magnetic resistance R includes no resistance of the air gap and comes to have a small value, whereby larger magnetic flux can be produced by smaller control electric power. If Z1 and Z3 contain no air gap (corresponding to FIG. 24), the magnetic resistance R does not include the air gap and likewise comes to have a small value. On the other hand, the magnetic resistance Rg2 of the air gap is invariable included in the magnetic resistance when viewed from the inductor winding b1-b2. Therefore, the magnetic resistance R is increased by arbitrarily determining the air gap length dg2, and it is possible to prevent the core saturation even by the large magnetomotive force N1I1.

Turning to FIG. 28, there is illustrated a block diagram of a second embodiment of the variable inductor used for the switching power source of the present invention. Referring to FIG. 28, a pair of symmetric EI-shaped closed magnetic paths are formed of the magnetic path members 12 - 14 - 11 - 16 - 12 and 12 - 15 - 13 - 17 - 12, which are provided in symmetry with respect to the magnetic path member 12. The winding a1-a2 may be defined as a control winding wound along the magnetic path member 12. A magnetic path member 18 assuming a substantially U-shape is connected via air gaps g14 and g15 to the magnetic path members 16 and 17, thus forming a closed magnetic path. The magnetic path member 18 is, as illustrated in the Figure, wound with the winding b1-b2 employed as an inductor winding, whereby, as in the case of the configuration of FIG. 23, the saturation can easily be performed from the control winding a1-a2 but is hard to be effected from the inductor winding b1-b2.

Incidentally, referring to FIG. 23, a practicable arrangement is that the rectangularly-shaped first magnetic path may be connected to the E-shaped second magnetic path with no air gap. In this case, the control winding and the inductor winding may be wound along the magnetic path members on either side.

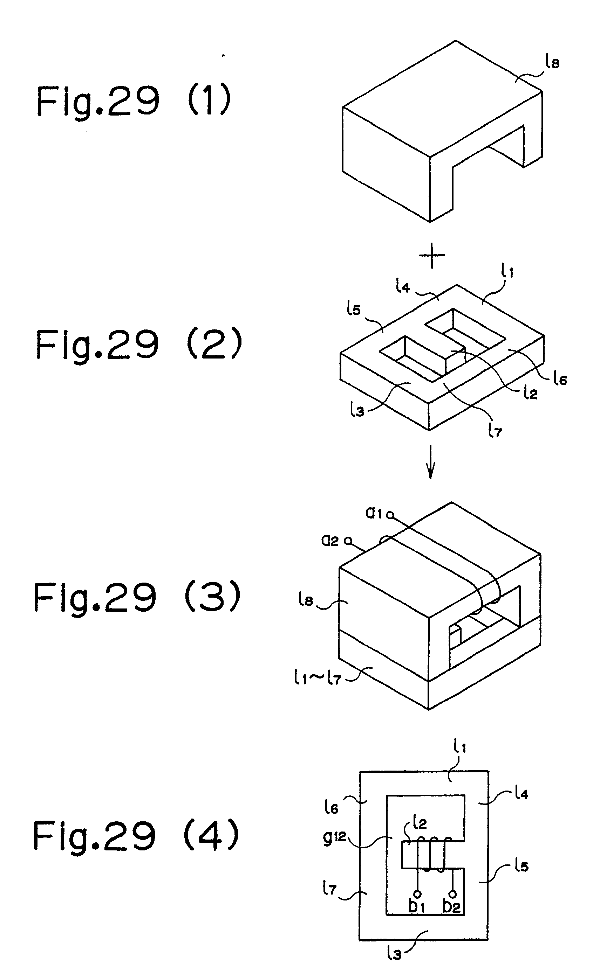

FIG. 29 illustrates an embodiment in which a combination of two magnetic paths of the variable inductor depicted in FIG. 24 is changed. The configuration is such that a substantially U-shaped magnetic path shown in FIG. 29(1) is, as illustrated in FIG. 29(3), combined heightwise with an EI-shaped magnetic path shown in FIG. 29(2). This configuration is advantageous when a mounting area on, e. g., a printed board is limited. Besides, an area of the core wound with the control winding can be set large, whereby a larger radiation area of the core can be obtained. FIG. 29(4) is a bottom view of FIG. 29(3), wherein an air gap is formed only in the magnetic path member 12 of the EI-shaped magnetic path. The configuration is not, however, limited to this. The air gaps may be formed at the respective ends of the three magnetic path members 11 through 13 which cooperate to assume an E-like configuration; or alternatively the configuration may include no air gap.

As discussed above, the switching power supply of the present invention exhibits the following advantages:

(1) The arrangement where the T type circuit is provided does eliminate the dependency of the output voltage on the fluctuations in load, as a result of which only the dependency on the fluctuations in input voltage is left. Hence, the control range of the output voltage can be narrowed. Further advantages are:

* the stability with respect to the sharp variations in load can be obtained;

* designing the feedback loop can be facilitated;

* the inter-output interference is reduced even in the multiple output power supplies; and

* the frequency variable width is diminished in such a control system as to change the switching frequency.

(2) One of two inductors which constitute the T type circuit involves the use of the leakage inductance of the transformer, and the capacitor utilizes the winding capacitance of the transformer. This arrangement eliminates the necessity for the capacity and the single inductor. Therefore,

* it is possible to reduce the number of the components and improve the reliability; and

* the device can be miniaturized.

(3) By virtue of provision of the variable inductor and the output voltage control circuit, the output voltage can be controlled at a constant level while keeping the switching frequency constant. Hence,

* the output filter can be miniaturized by increasing the switching frequency;

* the output filter may be designed in accordance with the switching frequency to take an easier countermeasure against the noises; and

* there can be removed the possibilities that beads are produced, and a lead-in operation between power supplies is mistakenly carried out when using a plurality of power supplies in parallel.

(4) Since the output control is effected while changing the inductance,

* the control circuit can be simplified to improve the reliability on the power supply; and

* the insulation of the control circuit is facilitated.

(5) As the fluctuations in input voltage are absorbed by providing the input feedforward loop,

* it is possible to reduce the variation range of the variable inductor for the output feedback and improve the transient response; and

the control electric power for the output feedback can be decreased.

(6) Since the variation width of the inductance needed for the output control is diminished by providing the switch control circuit for controlling the ON time of switching of the semiconductor switch in accordance with the input voltage,

* the transient characteristics of the output control can be ameliorated; and

* the variable inductor is readily miniaturized.

(7) As the RMS value of the current flowing in the dividing capacitors can be decreased by providing the resonant capacitor between the connecting point of the dividing capacitors for halving the input voltage and another connecting point of the semiconductor switches,

* the small-sized capacitor having a small allowable ripple current is usable to miniaturize the power supply; and

* the single resonant capacitor suffices with an improvement of the reliability on the power supply.

(8) As the variable inductor for use with the power supply of the present invention can be constructed to exhibit a considerably large value of the magnetic resistance when viewed from the inductor winding as compared with the magnetic resistance when viewed from the control winding with the result that the saturation is hard to take place from the inductor winding but is easy to take place from the control winding,

* the control current for changing the inductance can be lessened; and

* the responding velocity to the variations in inductance can be increased because of the fact that a small ampere-turn of the control winding suffices; and the lead wire resistance, the inductance and the parallel capacitance can be decreased.

Although the illustrative embodiments of the present invention have been described in detail with reference to the accompanying drawings, it is to be understood that the present invention is not limited to those precise embodiments. A variety of modifications or changes may be effected therein by one skilled in the art without departing from the scope or spirit of the invention.

## Claims

(1) A switching power supply for controlling an output voltage to a constant value with respect to fluctuations in input or in load, comprising:

a DC power supply;

two dividing capacitors connected in series to both ends of said DC power supply;

two semiconductor switches connected in series to both ends of said DC power supply;

a transformer having a primary winding one end of which is connected to a connecting point of said two dividing capacitors; and

a T type circuit composed of two inductors connected in series between a connecting point of said two semiconductor switches and the other end of said primary winding of said transformer and a capacitor connected between a connecting point of said two inductors and the other end of said primary winding of said transformer.

(2) A switching power supply for controlling an output voltage to a constant value with respect fo fluctuations in input or in load, comprising:
a DC power supply;
two dividing capacitors connected in series to both ends of said DC power supply;
two semiconductor switches connected in series to both ends of said DC power supply;
a transformer having a primary winding both ends of which are connected between a connecting point of said two dividing capacitors and a connecting point of said two semiconductor switches; and
a T type circuit composed of two inductors connected in series to one end of a secondary winding of said transformer and a capacitor connected between a connecting point of said two inductors and the other end of said secondary winding of said transformer.

(3) The switching power supply as set forth in Claim 1 or 2, wherein said one inductor, connected to said primary or secondary winding of said transformer, of said two inductor constituting said T type circuit is constructed of a leakage inductance on said primary or secondary side of said transformer.

(4) The switching power supply as set forth in Claims 1 and 2 or 3, wherein said capacitor constituting said T type circuit is constructed of a winding capacitance of said transformer.

(5) The switching power supply as set forth in Claims 1 through 3 or 4, further comprising two resonant capacitors connected in parallel to said two semiconductor switches, respectively.

(6) The switching power supply as set forth in Claims 1 through 3 or 4, further comprising a resonant capacitor between the connecting point of said two dividing capacitors and the connecting point of said two semiconductor switches to generate a loop current between said resonant capacitor and said T type circuit when turning OFF said two semiconductor switches.

(7) The switching power supply as set forth in Claims 1 through 5 or 6, further comprising an output voltage control circuit for increasing and decreasing a control current of a variable inductor employed as any one of said two inductors constituting said T type circuit in accordance with a difference between an output voltage and a reference voltage, said control current serving to change an inductance of said variable inductor to control the output voltage to a constant value.

(8) The switching power supply as set forth in Claim 7, further comprising an output voltage control circuit for increasing and decreasing a control current of any one of two divided variable inductors in accordance with a difference between the output voltage and the reference voltage and an input voltage control circuit for increasing and decreasing a control current of said other variable inductor in accordance with an input voltage, said control current serving to change inductances of said two variable inductors to control the output voltage to a constant value.

(9) The switching power supply as set forth in Claim 7, further comprising a switch control circuit composed of two pieces of dividing resistors connected in series to both ends of a DC power supply, a functional operation circuit for effecting a functional operation on output voltages divided by said two dividing resistors and a gate driving control circuit for controlling an ON time of switching of said two semiconductor switches on the basis of an output of said functional operation circuit, thereby diminishing a variation width of inductance of said variable inductor needed for controlling the output voltage.

(10) The switching power supply as set forth in Claims 7 and 8 or 9, wherein said variable inductor is constructed of a first closed magnetic path assuming a rectangular shape, a control winding wound along one of magnetic path members of said first closed magnetic path, an E-shaped second magnetic path including three magnetic path members connected via air gaps to all of ends of said magnetic path members wound with no winding of said first magnetic path or to only one end of said middle magnetic path member or connected via no air gap thereto, and an inductor winding wound along said middle magnetic path member of said second magnetic path.

(11) The switching power supply as set forth in Claims 7 and 8 or 9, wherein said variable inductor is constructed of an EI-shaped first closed magnetic path, a control winding wound along a middle magnetic path member of said first closed magnetic path, a substantially U-shaped second magnetic path including two magnetic path members connected via an air gap or no air gap to said I-shaped magnetic path member of said first magnetic path, and an inductor winding wound on said second magnetic path.

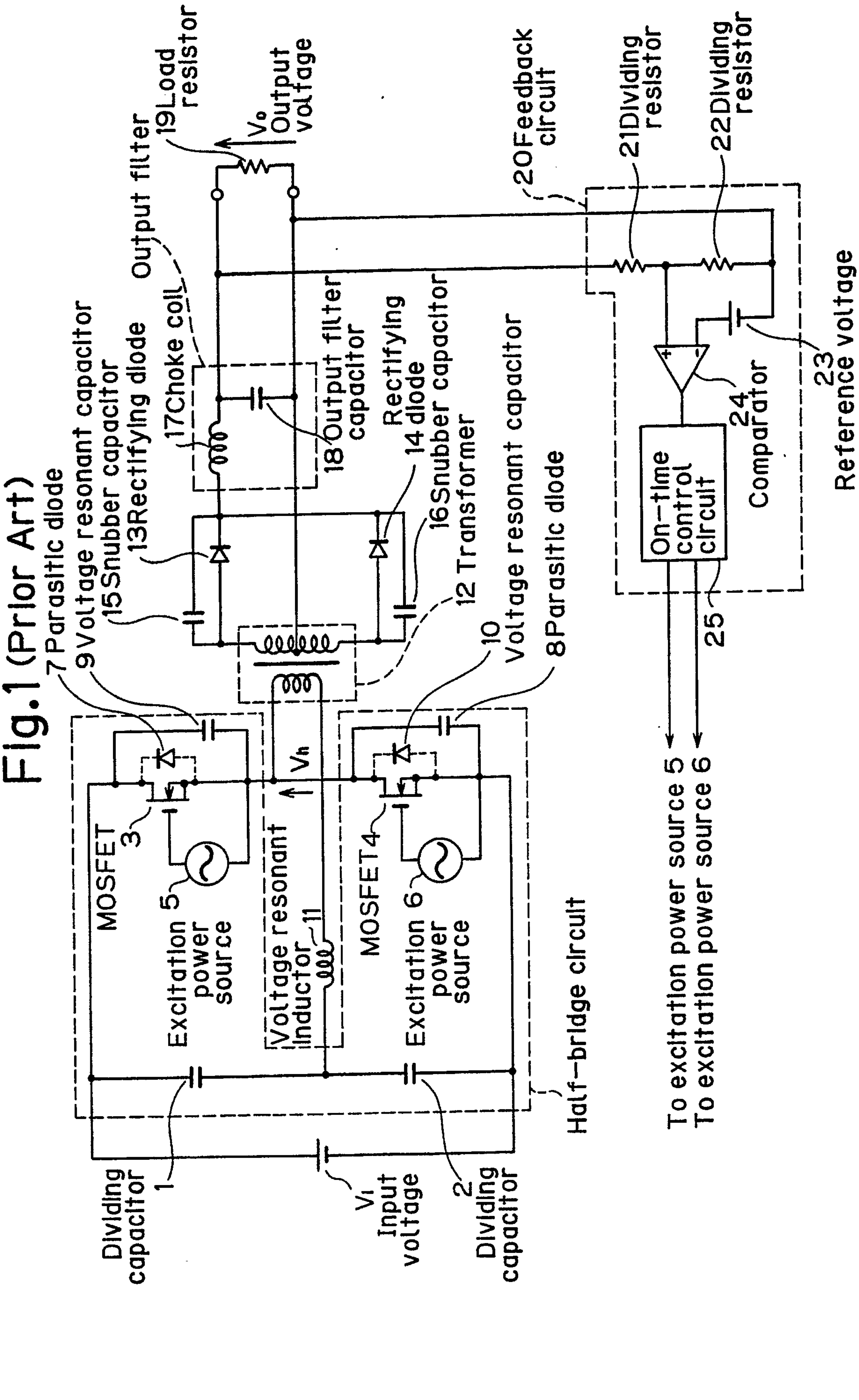

Fig.1 (Prior Art)

Fig.2

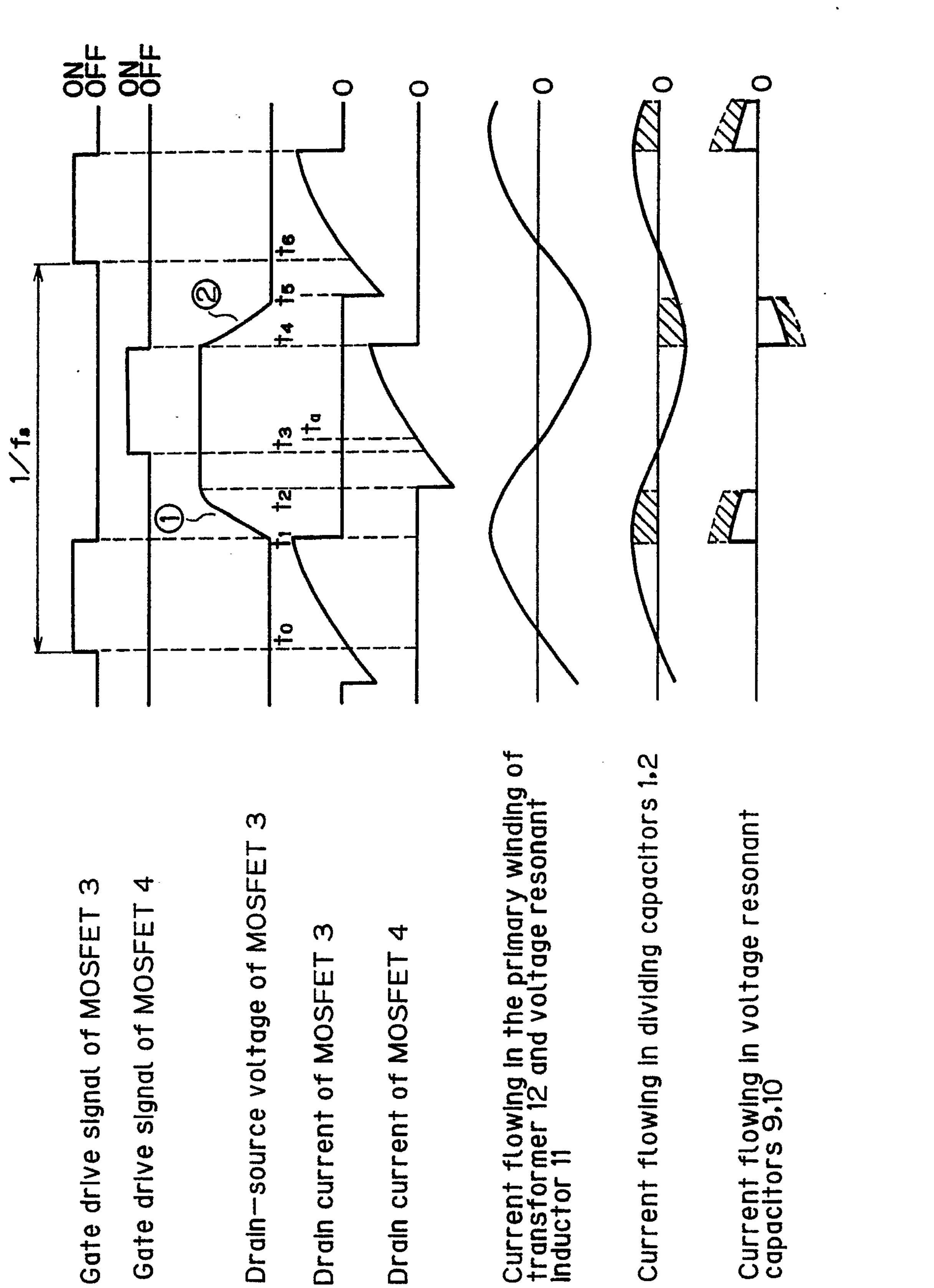
(1) Gate drive signal of MOSFET 3
(2) Gate drive signal of MOSFET 4
(3) Drain-source voltage of MOSFET 3
(4) Drain current of MOSFET 3
(5) Drain current of MOSFET 4
(6) Current flowing in the primary winding of transformer 12 and voltage resonant inductor 11
(7) Current flowing in dividing capacitors 1,2
(8) Current flowing in voltage resonant capacitors 9,10
1/fs
ON
OFF
ON
OFF
0
0
0
0
0
t0
t1
t2
t3
ta
t4
t5
t6
①
②

Fig.3

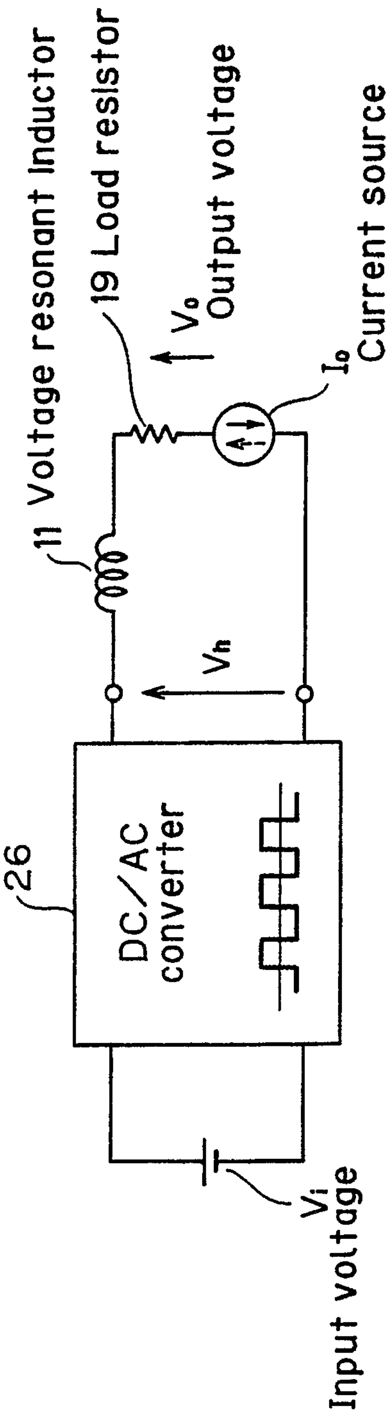
11 Voltage resonant Inductor
19 Load resistor
$V_o$
Output voltage
$I_o$
Current source
$V_n$
26
DC/AC
converter
$V_i$
Input voltage

Fig.4

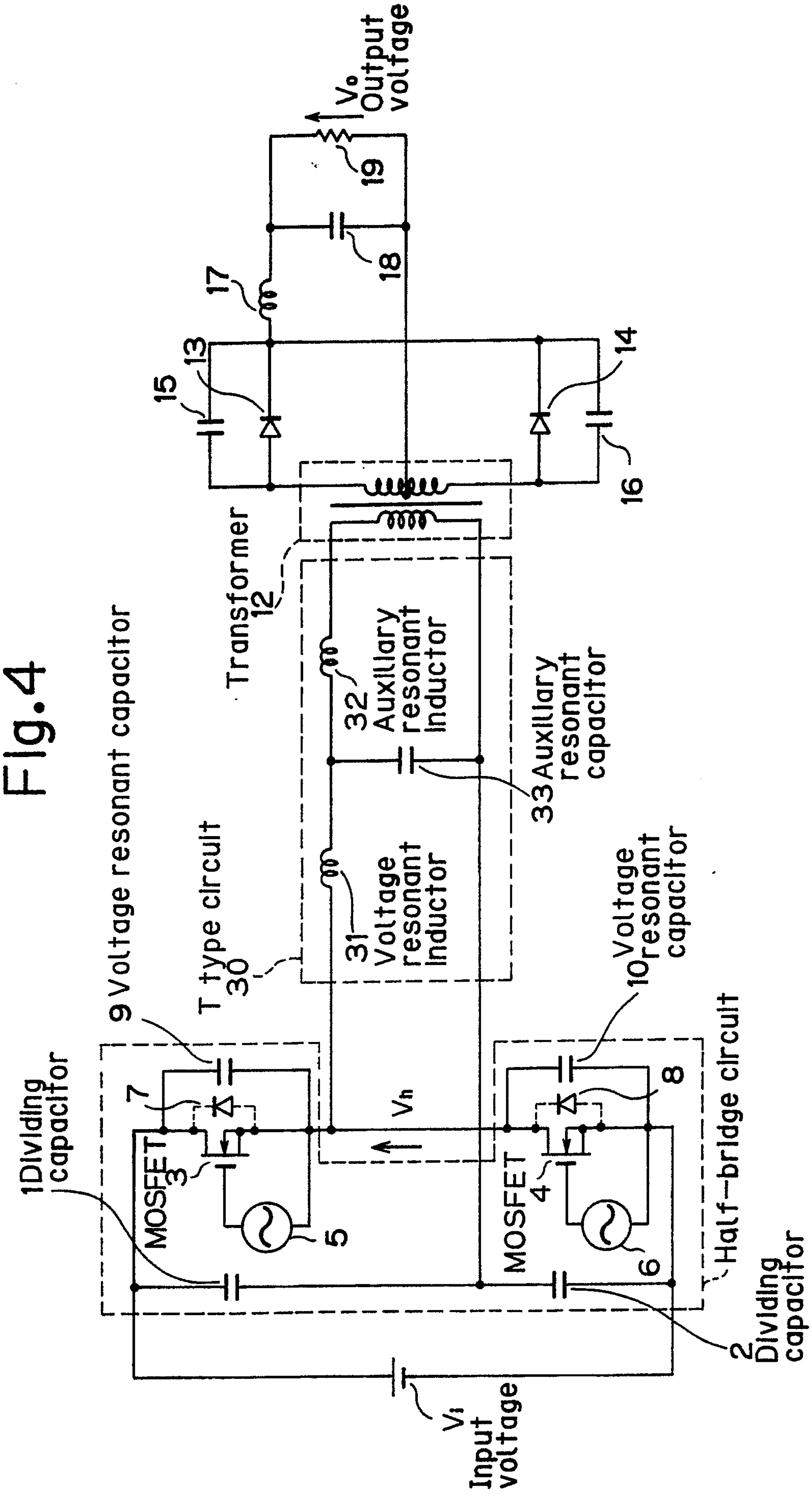
9 Voltage resonant capacitor
T type circuit
30
1 Dividing capacitor
7
MOSFET
3
5
Vh
31 Voltage resonant inductor
32 Auxiliary resonant inductor
33 Auxiliary resonant capacitor
Transformer
12
10 Voltage resonant capacitor
8
MOSFET
4
6
Half-bridge circuit
2 Dividing capacitor
Vi
Input voltage
15
13
14
16
17
18
19
Vo
Output voltage

Fig.5

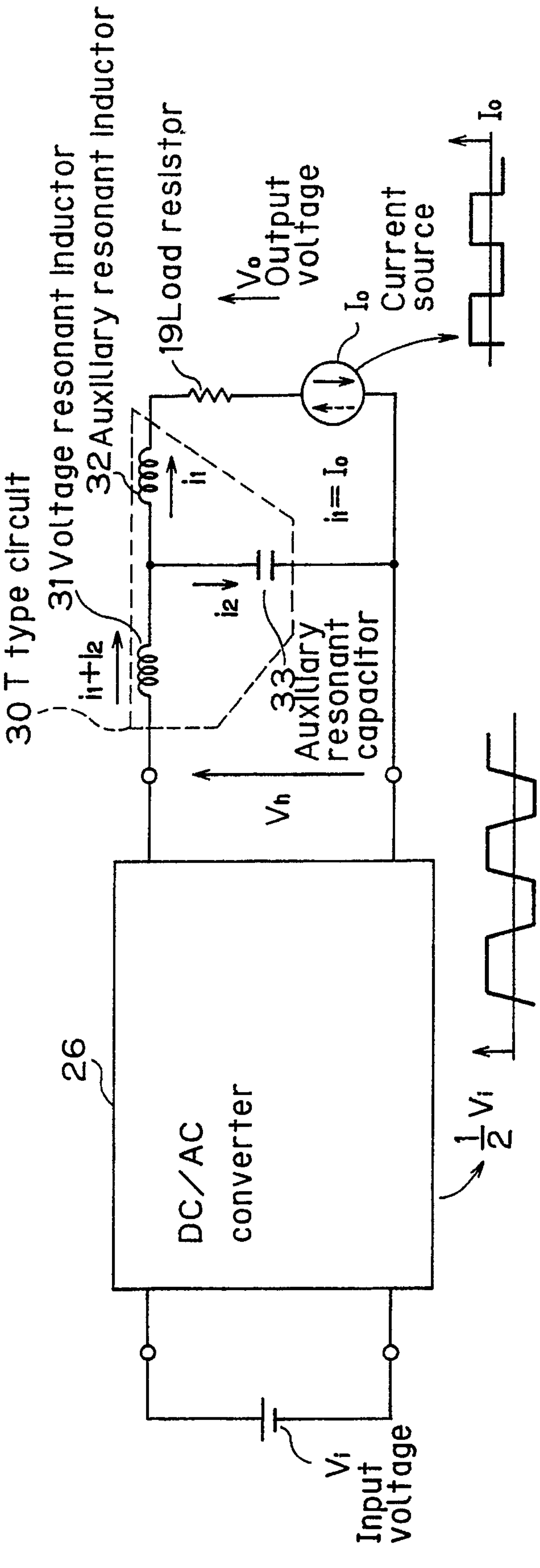
30 T type circuit
31 Voltage resonant inductor
32 Auxiliary resonant inductor
19 Load resistor
$V_o$ Output voltage
$I_o$ Current source
$i_1$
$i_1+i_2$
$i_2$
$i_1=I_o$
33 Auxiliary resonant capacitor
$V_h$
26
DC/AC converter
$\frac{1}{2}V_i$
$V_i$ Input voltage

Fig.6

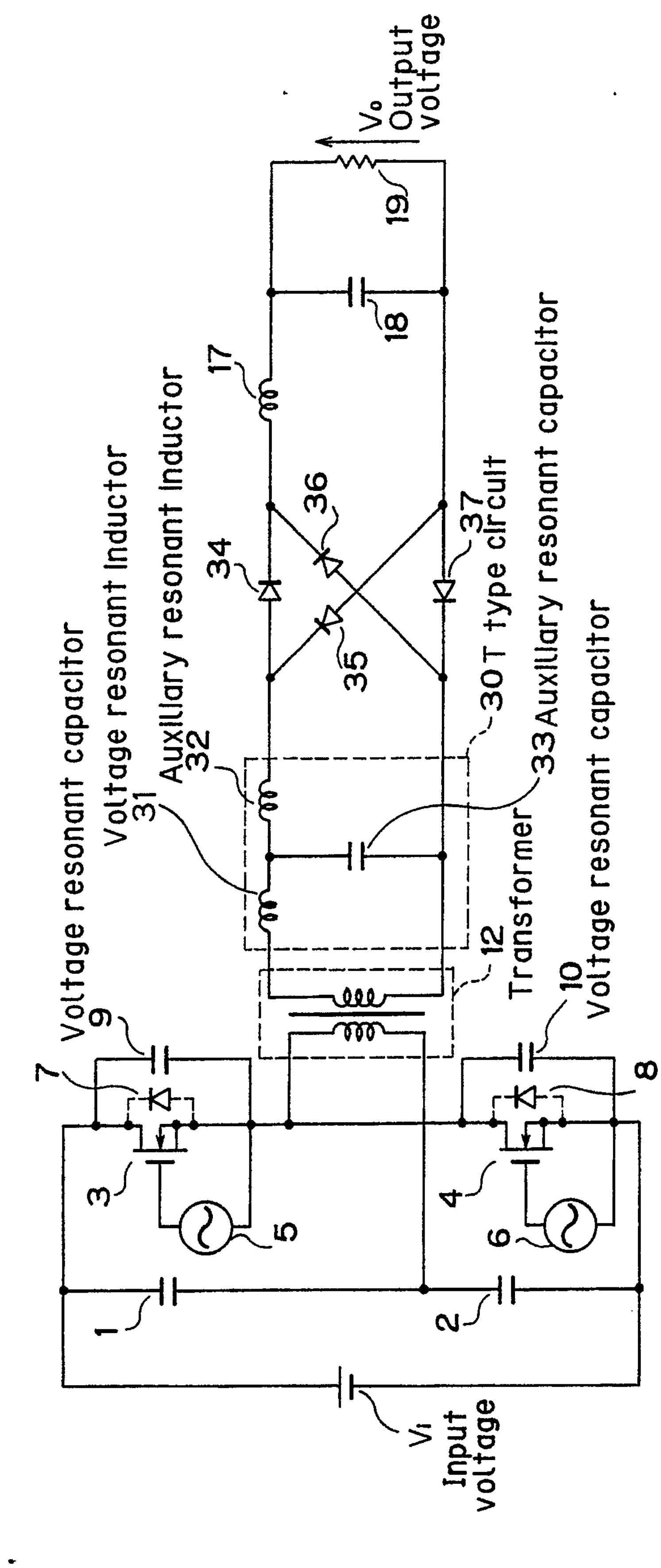
Voltage resonant capacitor
9
7
3
5
Voltage resonant inductor
31
Auxiliary resonant inductor
32
34
36
35
17
18
19
Vo
Output
voltage
30T type circuit
37
33 Auxiliary resonant capacitor
12
Transformer
10
Voltage resonant capacitor
8
4
6
1
2
Vi
Input
voltage

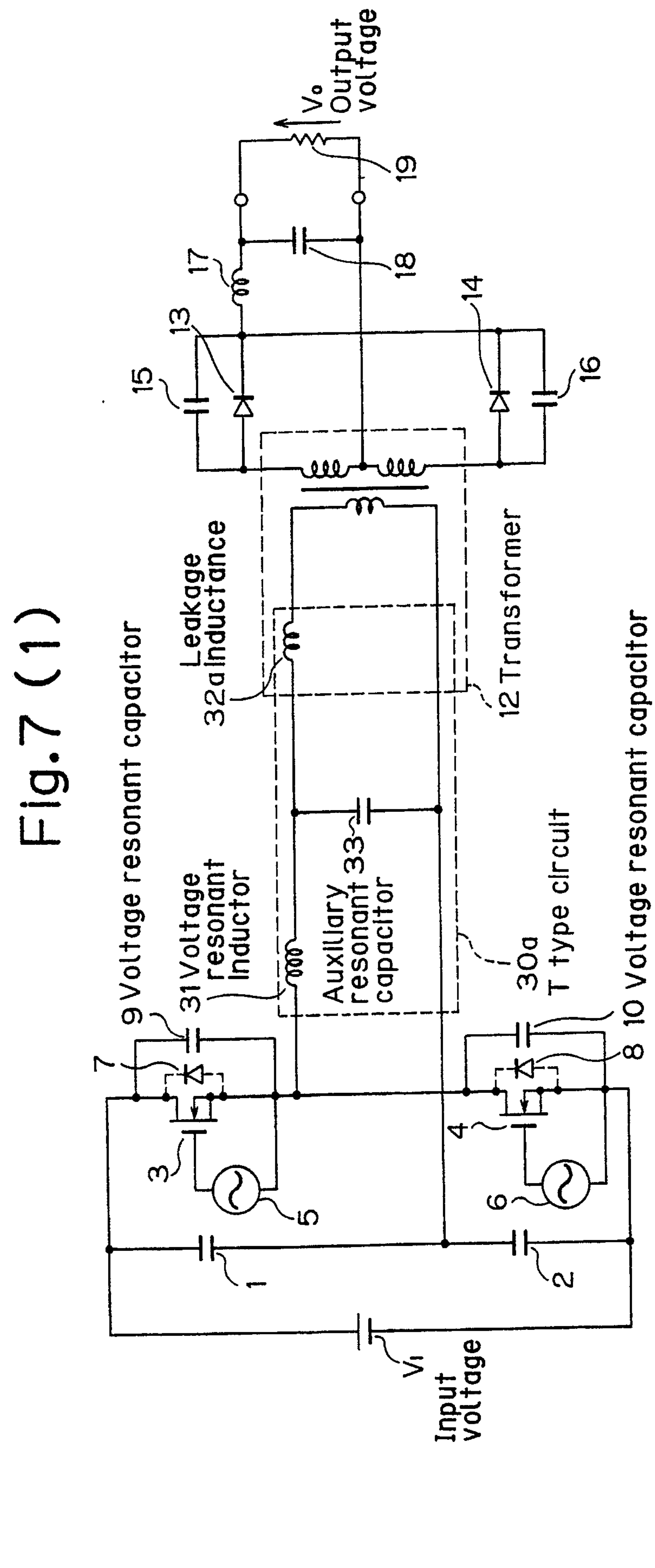
9 Voltage resonant capacitor
31 Voltage resonant inductor
Auxiliary resonant 33 capacitor
30a T type circuit
Leakage 32a inductance
12 Transformer
10 Voltage resonant capacitor
Input voltage
$V_I$
Output voltage
$V_o$
1
2
3
4
5
6
7
8
13
14
15
16
17
18
19

Fig.7 (1)

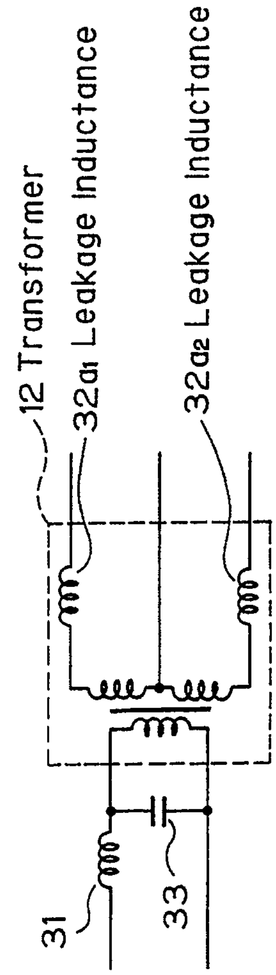
12 Transformer
$32a_1$ Leakage inductance
$32a_2$ Leakage inductance
31
33

Fig.7 (2)

Fig.8

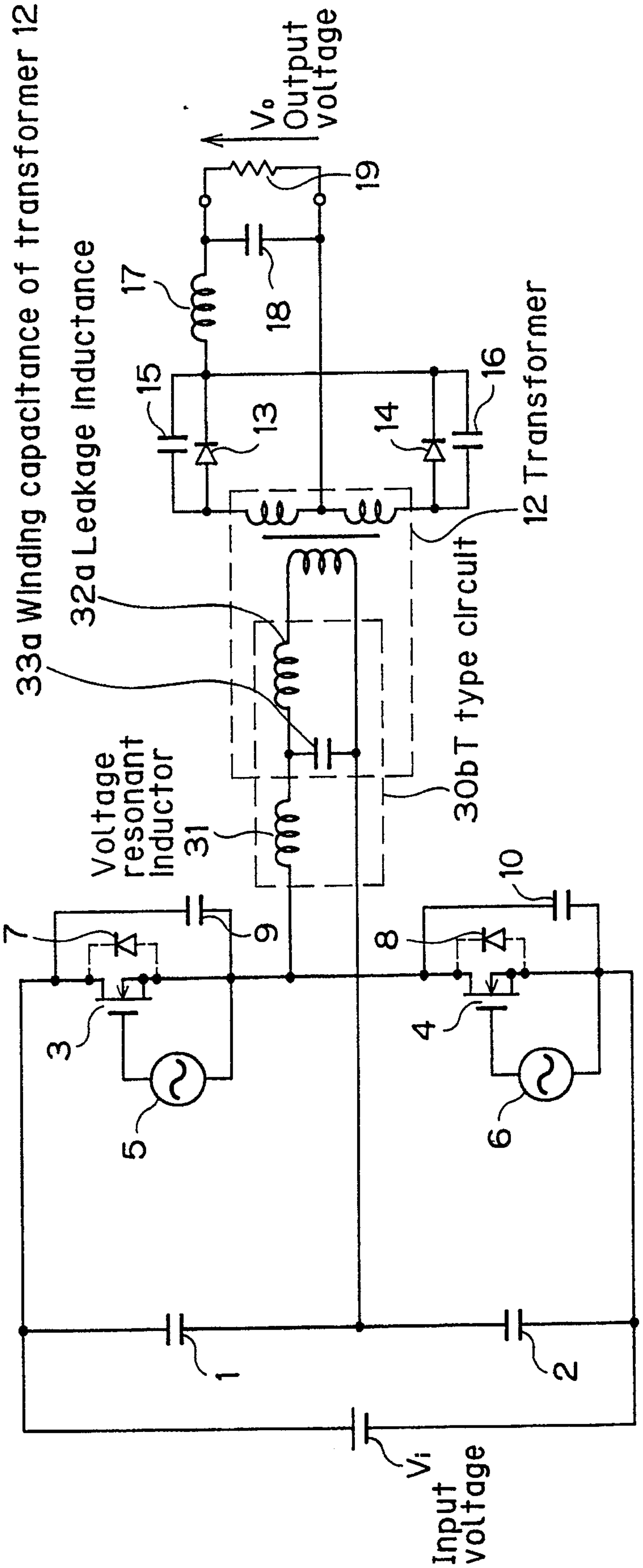
33a Winding capacitance of transformer 12
32a Leakage inductance
Voltage resonant inductor 31
30bT type circuit
12 Transformer
Vo Output voltage
Vi Input voltage
1
2
3
4
5
6
7
8
9
10
13
14
15
16
17
18
19

Fig.9

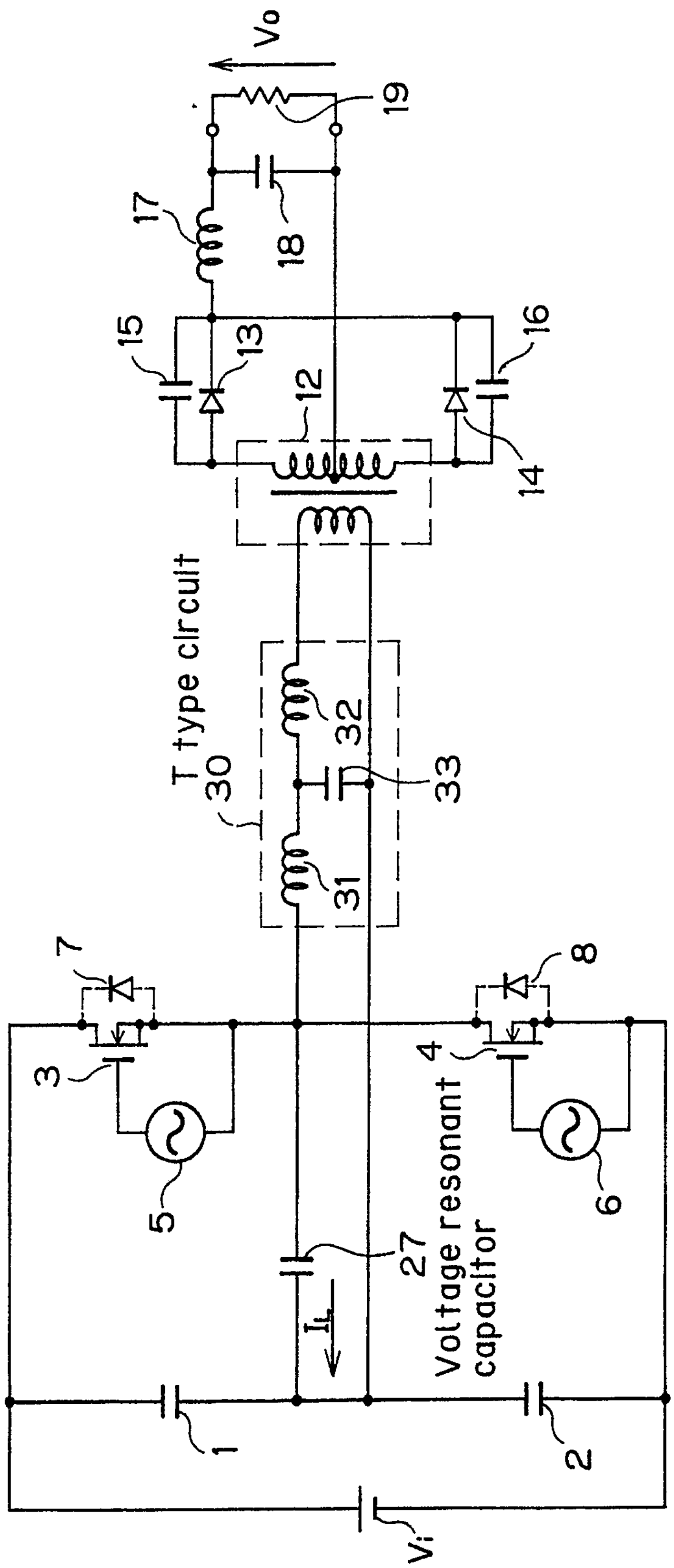
Vo
19
17
18
15
13
12
16
14
T type circuit
30
31
32
33
7
8
3
4
Voltage resonant
capacitor
5
6
27
$I_L$
1
2
$V_i$

Fig.10 (1)
Period: $t_1 \leq t < t_2$

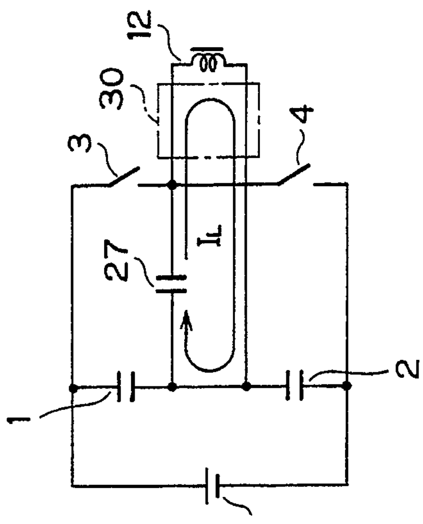


Fig.10 (2)
Period: $t_2 \leq t < t_a$

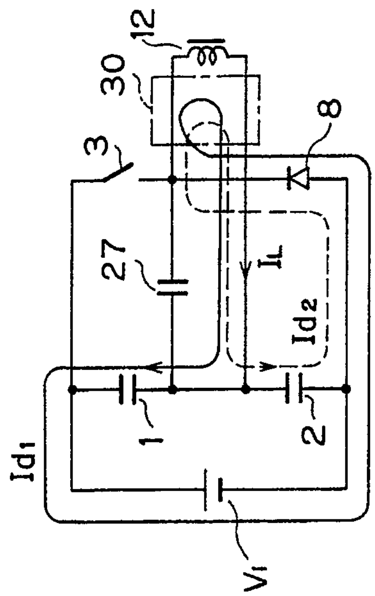


Fig.10 (3)
Period: $t_a \leq t < t_4$

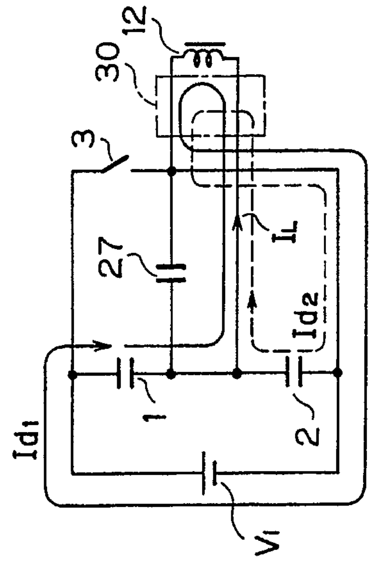


Fig.10 (4)
Period: $t_4 \leq t < t_5$

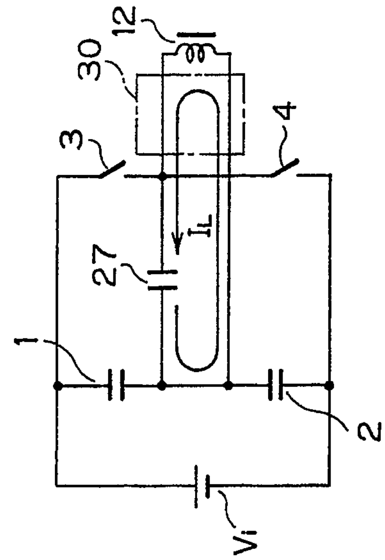

Fig.11

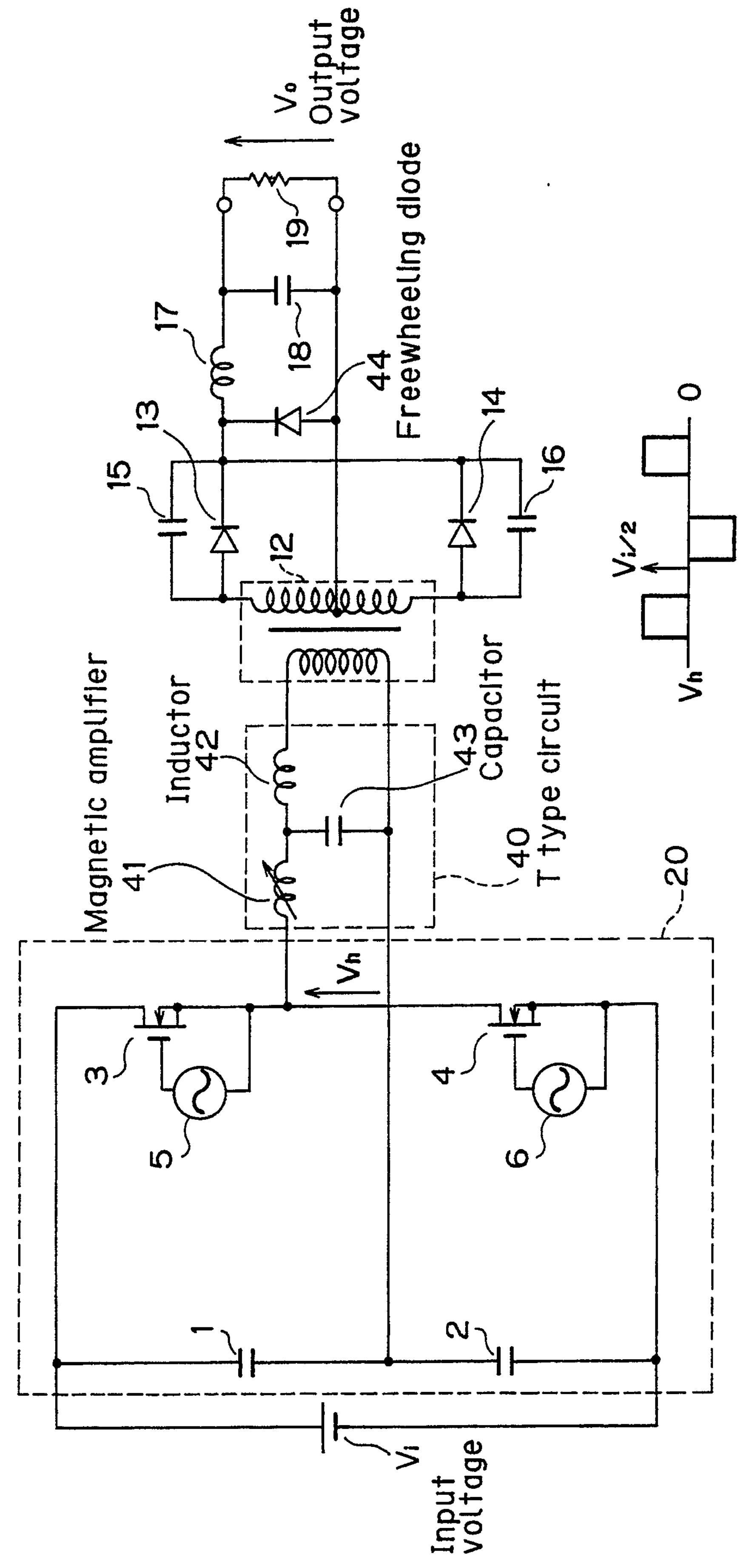

Magnetic amplifier
41
Inductor
42
43
Capacitor
40
T type circuit
20
$V_h$
3
4
5
6
1
2
$V_i$
Input voltage
12
13
14
15
16
17
18
19
44
Freewheeling diode
$V_o$
Output voltage
$V_{i/2}$
$V_h$
0

Fig.12

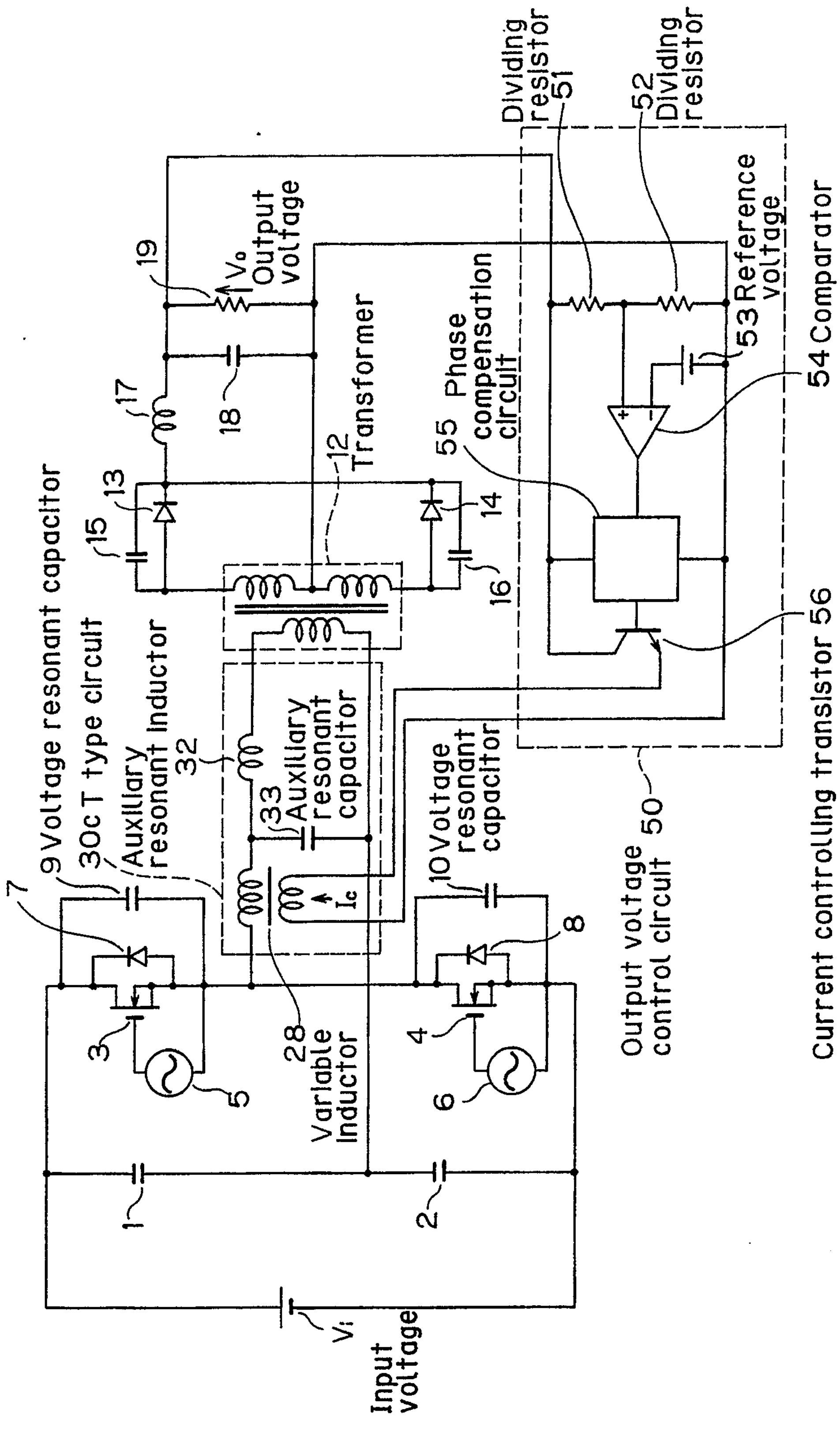

9 Voltage resonant capacitor
30 c T type circuit
Auxiliary resonant inductor
7
32
33 Auxiliary resonant capacitor
10 Voltage resonant capacitor
8
3
4
5
6
28 Variable inductor
$I_c$
1
2
$V_i$
Input voltage
15
13
14
16
12 Transformer
17
18
19
$V_o$ Output voltage
55 Phase compensation circuit
Dividing resistor 51
52 Dividing resistor
53 Reference voltage
54 Comparator
56
Current controlling transistor 56
Output voltage control circuit 50

Fig.13

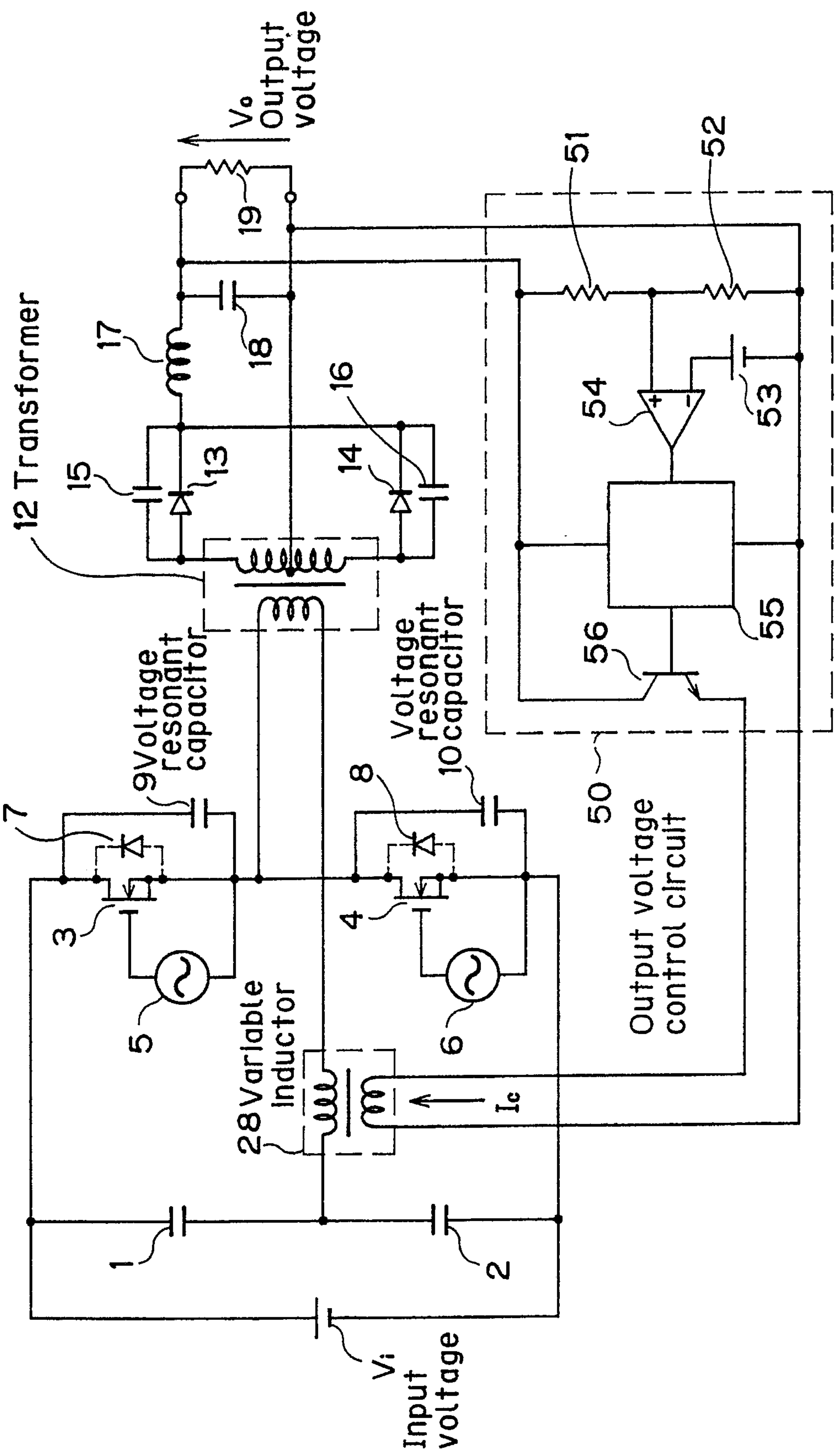

Vo
Output voltage
19
51
52
17
18
12 Transformer
15
13
14
16
54
53
55
56
50
Output voltage control circuit
9 Voltage resonant capacitor
Voltage resonant
10 capacitor
7
8
3
4
5
6
28 Variable Inductor
Ic
1
2
Vi
Input voltage

Fig.14

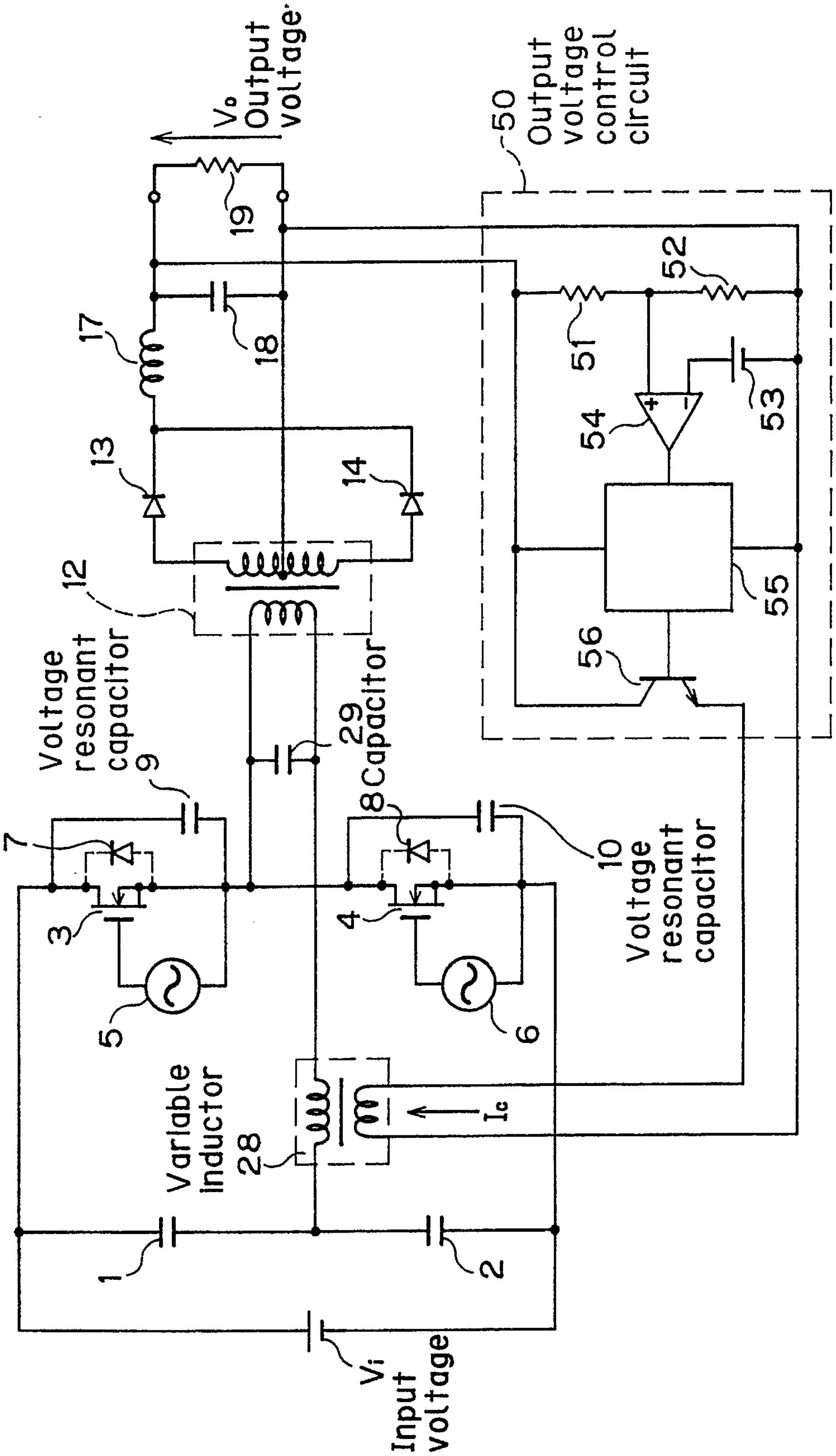
Voltage resonant capacitor
9
7
3
5
Variable inductor
28
1
Vi
Input voltage
2
6
4
8 Capacitor
10
Voltage resonant capacitor
29 Capacitor
12
13
14
17
18
19
Vo
Output voltage
50
Output voltage control circuit
51
52
53
54
55
56
Ic

Fig.15

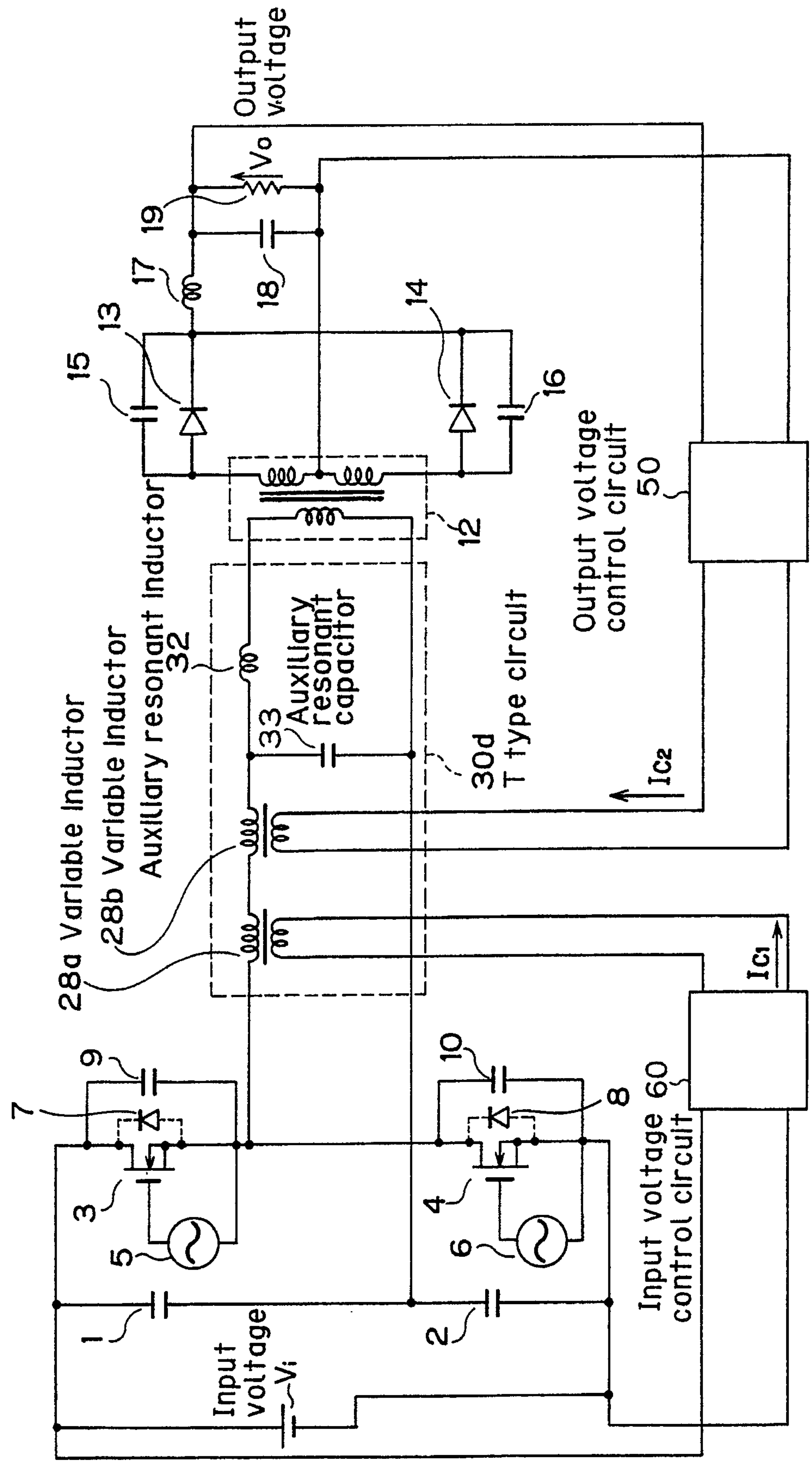
Output voltage
Vo
19
17
18
13
15
14
16
12
28a Variable inductor
28b Variable inductor
Auxiliary resonant inductor
32
33 Auxiliary resonant capacitor
30d T type circuit
Ic2
Output voltage control circuit
50
Ic1
7
9
3
5
10
8
4
6
1
2
Input voltage
Vi
Input voltage 60 control circuit

Fig.16

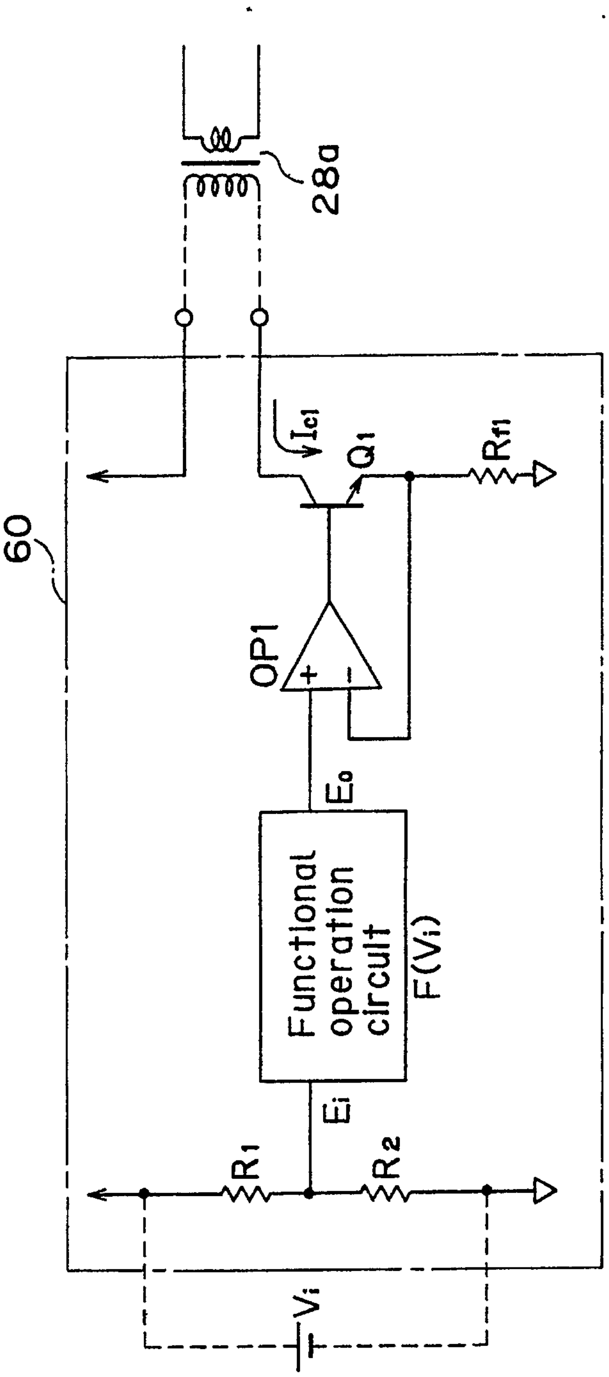
28a
60
$I_{c1}$
$Q_1$
$R_{f1}$
OP1
$E_o$
Functional operation circuit F($V_i$)
$E_i$
$R_1$
$R_2$
$V_i$

Fig.17

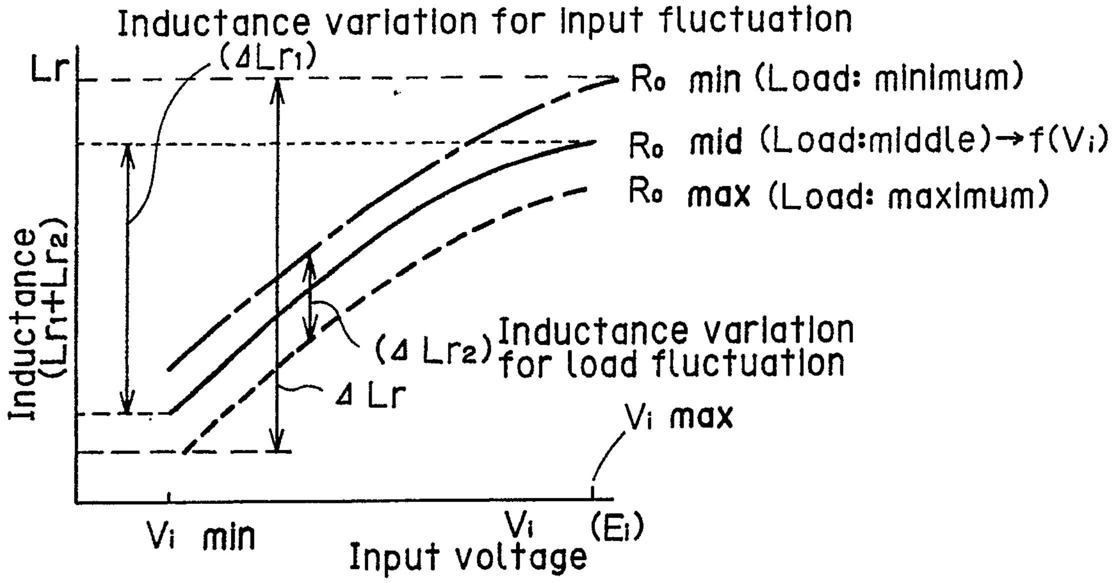
Inductance variation for input fluctuation
Lr
(ΔLr1)
Ro min (Load: minimum)
Ro mid (Load:middle)→f(Vi)
Ro max (Load: maximum)
Inductance (Lr1+Lr2)
(Δ Lr2) Inductance variation for load fluctuation
Δ Lr
Vi max
Vi min
Vi (Ei)
Input voltage

Fig.18

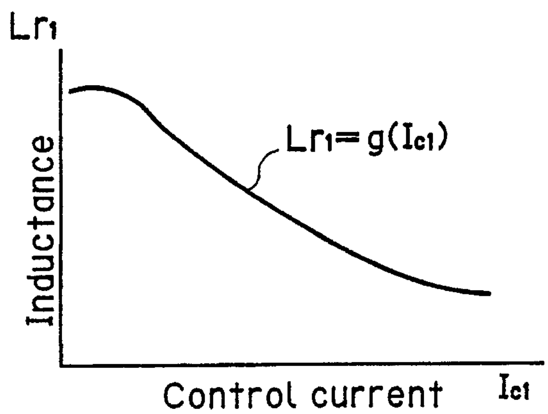
Lr1
Lr1=g(Ic1)
Inductance
Control current
Ic1

Fig.19

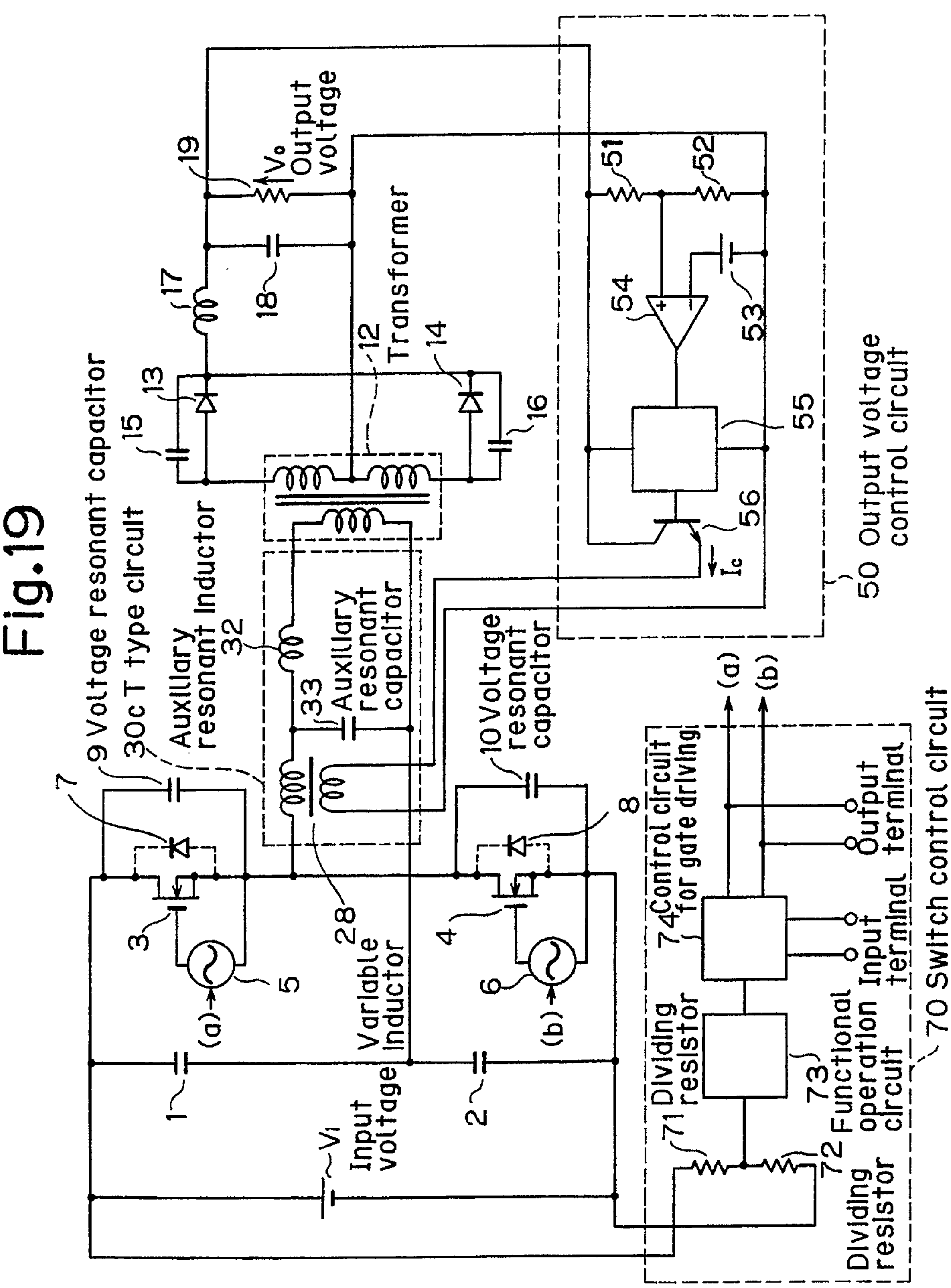
9 Voltage resonant capacitor
30c T type circuit
Auxiliary resonant inductor
32
33 Auxiliary resonant capacitor
10 Voltage resonant capacitor
7
8
3
4
5
6
(a)
(b)
28
Variable inductor
1
2
$V_i$ Input voltage
13
15
14
16
12
Transformer
17
18
19
$V_o$ Output voltage
51
52
53
54
55
56
$I_c$
50 Output voltage control circuit
71
72
Dividing resistor
Dividing resistor
73 Functional operation circuit
74 Control circuit for gate driving
Input terminal
Output terminal
70 Switch control circuit

Fig.20

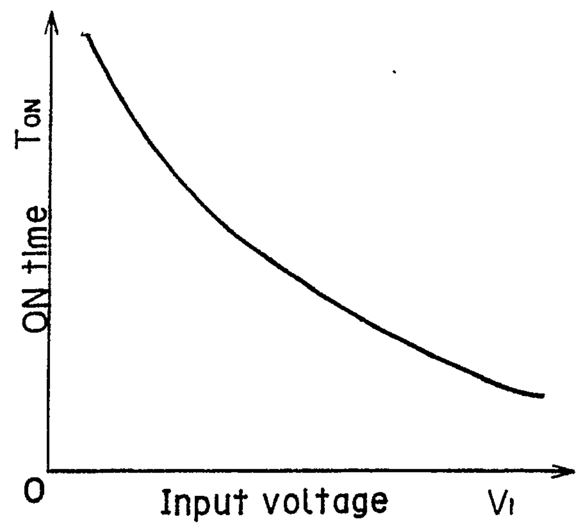

ON time TON
0
Input voltage
Vi


Fig.21

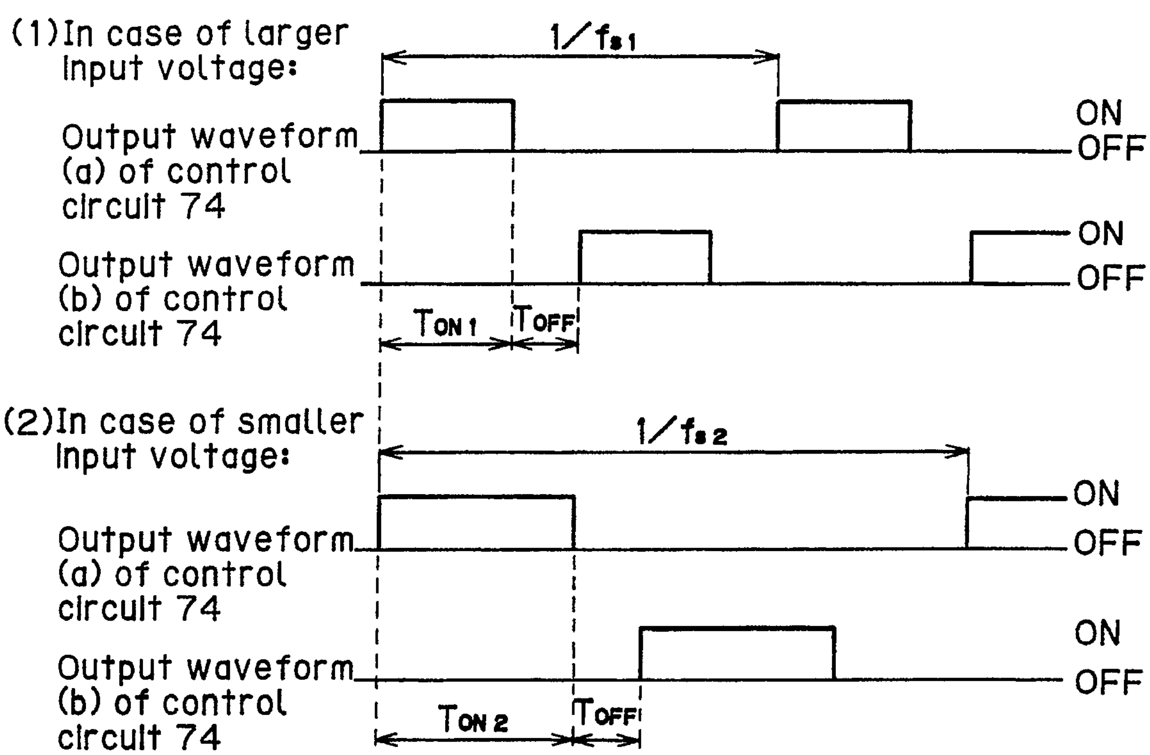

(1)In case of larger input voltage:
1/fs1
Output waveform (a) of control circuit 74
ON
OFF
Output waveform (b) of control circuit 74
ON
OFF
TON1
TOFF
(2)In case of smaller input voltage:
1/fs2
Output waveform (a) of control circuit 74
ON
OFF
Output waveform (b) of control circuit 74
ON
OFF
TON2
TOFF

Fig.22

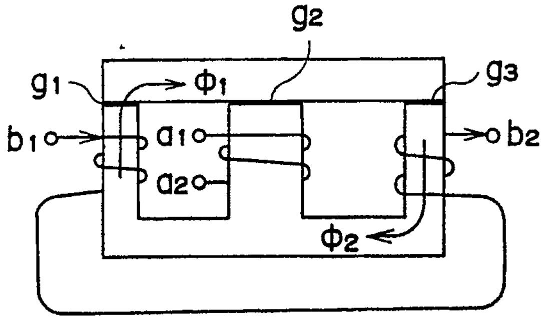


Fig.23

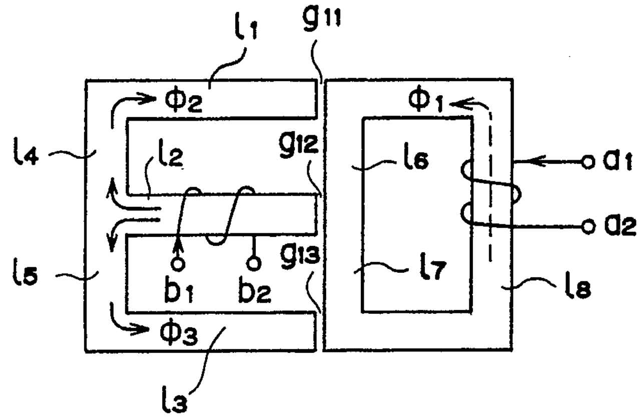


a1—a2: Control winding
b1—b2: Inductor winding
g11～g13: Air gap
l1～l8: Member of magnetic path

Fig.24

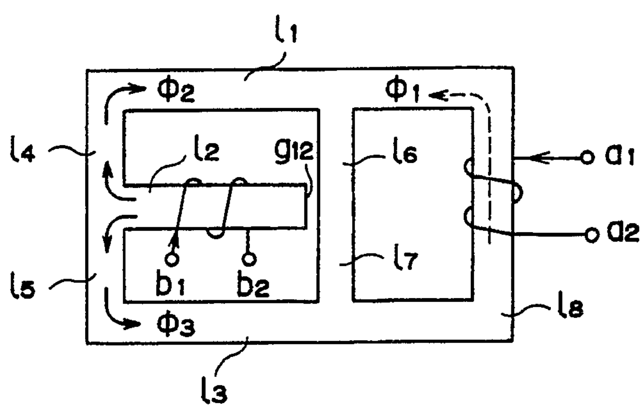

Fig.25

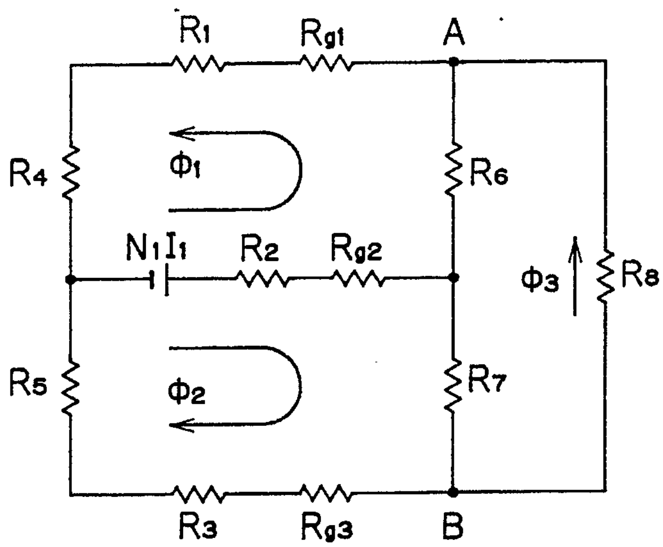
R1
Rg1
A
R4
Φ1
R6
N1I1
R2
Rg2
Φ3
R8
R5
Φ2
R7
R3
Rg3
B

Fig.26

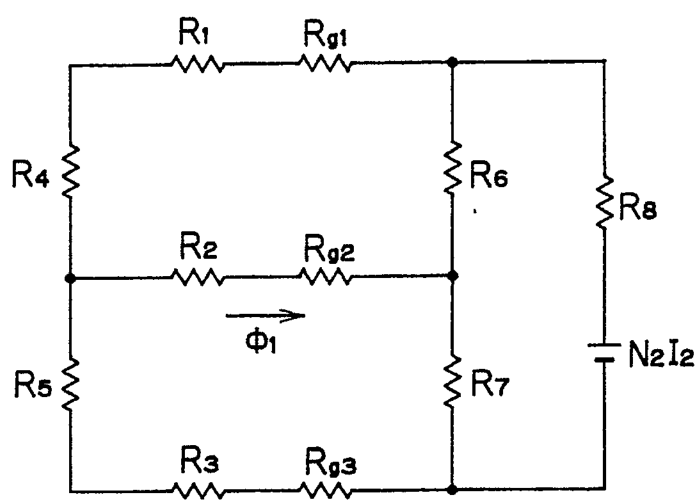
R1
Rg1
R4
R6
R8
R2
Rg2
Φ1
N2I2
R5
R7
R3
Rg3

Fig.27

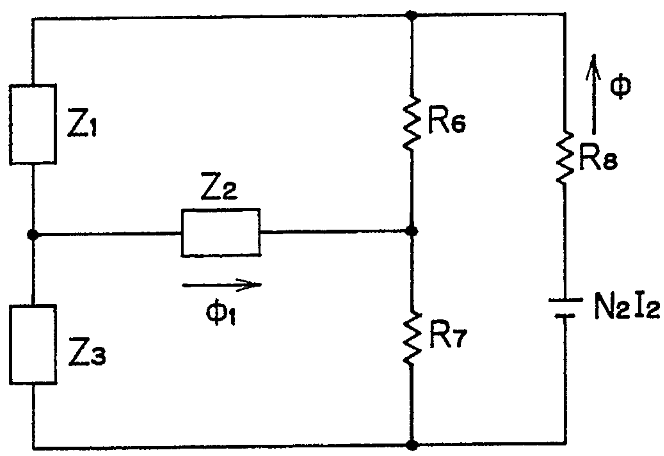
Z1
Z2
Z3
Φ1
R6
R7
R8
Φ
N2I2

Fig.28

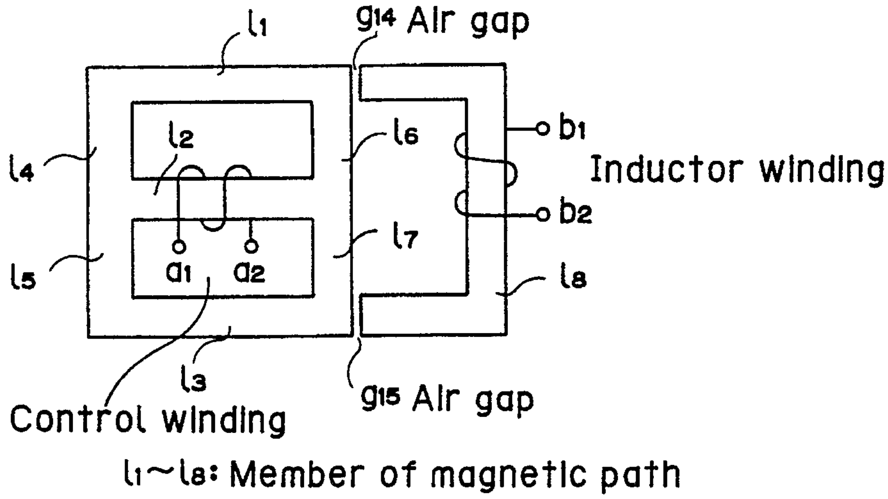
l1
g14 Air gap
l2
l4
l5
l6
l7
l8
a1
a2
b1
b2
Inductor winding
l3
Control winding
g15 Air gap
l1~l8: Member of magnetic path

Fig.29 (1)

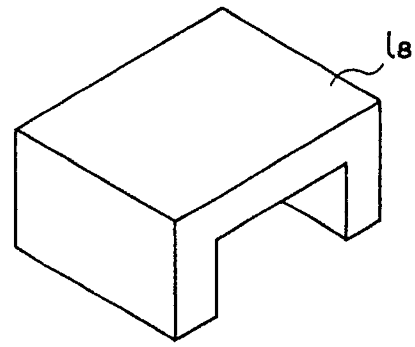


Fig.29 (2)

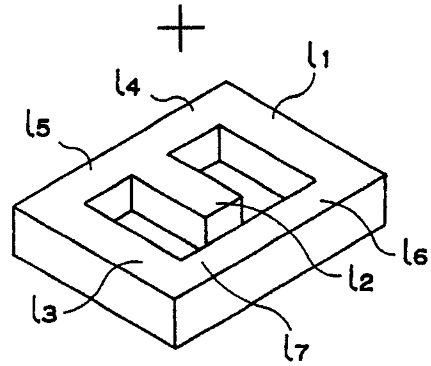


Fig.29 (3)

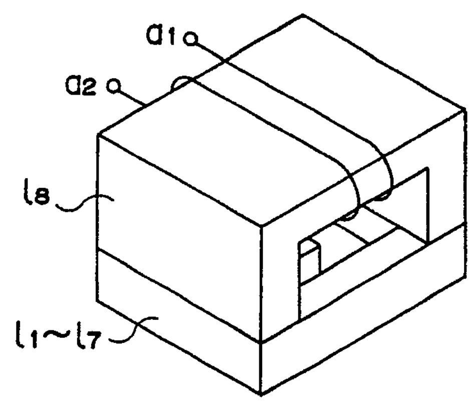


Fig.29 (4)